# EUROPEAN PATENT SPECIFICATION

(11) **EP 1 529 944 B1**
(45) Date of publication and mention of the grant of the patent: **09.08.2006**
(21) Application number: 04026232.1
(22) Date of filing: 04.11.2004
(51) Int. Cl.: F02D 41/02, F02D 41/14, G01N 33/00, F01N 11/00

(54) **Exhaust gas control apparatus and method for internal combustion engine**
Abgassteuerungsvorrichtung und Verfahren für eine Brennkraftmaschine
Dispositif et procédé de regulation des gaz d'echappement pour moteurs a combustion interne

(30) Priority: 06.11.2003 JP 2003377050
(43) Date of publication of application: 11.05.2005
(73) Proprietor: Toyota Jidosha Kabushiki Kaisha, Toyota-shi, Aichi-ken, 471-8571 (JP)
(72) Inventor: Irisawa, Yasuyuki, Toyota-shi Aichi-ken, 471-8571 (JP); Kubota, Hirofumi, Toyota-shi Aichi-ken, 471-8571 (JP); Demura, Takayuki, Toyota-shi Aichi-ken, 471-8571 (JP); Miyashita, Shigeki, Toyota-shi Aichi-ken, 471-8571 (JP)
(74) Representative: TBK-Patent

(56) References cited:
- EP-A- 1 138 898
- US-A1- 2004 040 292

## Description

### BACKGROUND OF THE INVENTION

### 1. Field of the Invention

The invention relates to an exhaust gas control apparatus and method for an internal combustion engine. More particularly, the invention relates to an exhaust gas control apparatus and method for an internal combustion engine, which includes a NOx storage reduction catalyst.

### 2. Description of the Related Art

There is known a NOx storage reduction catalyst which stores NOx in exhaust gas by adsorbing and/or absorbing the NOx when an air-fuel ratio of the exhaust gas flowing therein is lean, and which reduces the stored NOx using reducing components such as CO and H₂, and HC contained in the exhaust gas (hereinafter, collectively referred to as "reducing components") when an air-fuel ratio of the exhaust gas flowing therein is rich.

In an exhaust gas control apparatus using a NOx storage reduction catalyst, for example, while an engine is operated at a lean air-fuel ratio, the NOx storage reduction catalyst is made to store NOx in exhaust gas having a lean air-fuel ratio, and when an amount of the NOx stored in the NOx storage reduction catalyst increases, a rich spike operation is performed. In the rich spike operation, the air-fuel ratio is changed to a rich air-fuel ratio and the engine is operated at the rich air-fuel ratio for a short time such that an air-fuel ratio of exhaust gas flowing in the catalyst is made rich. By performing the rich spike operation, the NOx stored in the NOx storage reduction catalyst is removed by being reduced due to reducing components and the like contained in the exhaust gas having a rich air-fuel ratio.

An example of an exhaust gas control apparatus for an internal combustion engine, which uses such type of NOx storage reduction catalyst is disclosed in, for example, Japanese Patent Application Publication No. JP-A-11-107828.

The apparatus disclosed in Japanese Patent Application Publication No. JP-A-11-107828 is configured by arranging a NOx sensor and an O₂ sensor directly in a carrier (more particularly, in an intermediate portion between an inlet and an outlet of the carrier) of a NOx storage reduction catalyst provided in an exhaust passage of an internal combustion engine. In the apparatus disclosed in Japanese Patent Application Publication No. JP-A-11-107828, when a NOx concentration in exhaust gas, which is detected by the NOx sensor, becomes equal to or higher than a predetermined determination value while the internal combustion engine is operated at a lean air-fuel ratio, the air-fuel ratio is changed to a rich air-fuel ratio and the rich spike operation is started. Then, when an output from the O₂ sensor becomes equal to a predetermined determination value after the rich spike operation is started, the air-fuel ratio is changed to a lean air-fuel ratio and the rich spike operation ends.

When an air-fuel ratio is changed to a rich air-fuel ratio by performing the rich spike operation, a time lag due to movement of the exhaust gas occurs between when the air-fuel ratio is changed to a rich air-fuel ratio and when the exhaust gas having a rich air-fuel ratio actually reaches the NOx storage reduction catalyst in the exhaust passage. Accordingly, in the conventional apparatus, it is necessary to decide start time of a rich spike operation with a certain degree of leeway. Therefore, an actual rich air-fuel ratio operation period is usually made longer than a truly required period. As a result, problems such as deterioration of fuel efficiency and torque fluctuations occur.

In the apparatus disclosed in Japanese Patent Application Publication No. JP-A-11-107828, the NOx sensor and the O₂ sensor directly provided in the catalyst detect an actual atmosphere of the inside of the NOx storage reduction catalyst (more particularly, the intermediate portion of the carrier). It is therefore possible to solve the above-mentioned problems, and appropriately set start time and end time of the rich spike operation (the period in which the rich spike operation is performed).

Namely, when an amount of the NOx stored in the NOx storage reduction catalyst increases, an amount of NOx, which is not stored in the catalyst and passes through the catalyst, increases in the NOx in the exhaust gas. In the apparatus disclosed in Japanese Patent Application Publication No. JP-A-11-107827, when an amount (concentration) of NOx which passes through a first half portion (i.e., a portion on the upstream side with respect to the NOx sensor) of the carrier increases to a predetermined determination value, a determination that the amount of NOx stored in the NOx storage reduction catalyst has increased is made, and the rich spike operation is started. Thus, in the apparatus disclosed in Japanese Patent Application Publication No. JP-A-11-107828, the rich spike operation can be started at appropriate time before the entire NOx storage reduction catalyst is saturated with the NOx stored therein.

Also, in the NOx storage reduction catalyst, even if the air-fuel ratio of the exhaust gas flowing therein is changed to a rich air-fuel ratio, the air-fuel ratio of the exhaust gas in an outlet of the NOx storage reduction catalyst is maintained at an air-fuel ratio near the stoichiometric air-fuel ratio while the stored NOx is reduced. When the entire amount of the stored NOx is reduced, the air-fuel ratio of the exhaust gas in the outlet of the catalyst is changed to a rich air-fuel ratio that is substantially the same as that of the exhaust gas in an inlet of the catalyst.

In the apparatus disclosed in Japanese Patent Application Publication No. JP-A-11-107828, an air-fuel ratio in the intermediate portion of the carrier of the catalyst is detected, and when the detected air-fuel ratio becomes a predetermined rich air-fuel ratio, the rich spike operation ends. Thus, in the apparatus disclosed in Japanese Patent Application Publication No. JP-A-11-107828, the rich spike operation ends before the exhaust gas having a rich air-fuel ratio is actually discharged to the downstream side of NOx storage reduction catalyst. As a result, HC, CO and the like are prevented from being released from the NOx storage reduction catalyst.

In the apparatus disclosed in Japanese Patent Application Publication No. JP-A-11-107828, the NOx sensor and the O₂ sensor are directly inserted in a portion near the intermediate portion of the carrier of the NOx storage reduction catalyst, and a NOx concentration and an oxygen concentration in the exhaust gas are measured. Therefore, if the NOx storage reduction catalyst is classified into a portion on the upstream side with respect to the portion in which the sensors are provided (first half portion) and a portion on the downstream side with respect to the portion in which the sensors are provided (second half portion), in the apparatus disclosed in Japanese Patent Application Publication No. JP-A-11-107828, storage and reduction of NOx performed by the entire NOx storage reduction catalyst including the first half portion and the second half portion are controlled, in actuality, based on a result of detection of the NOx concentration and the oxygen concentration in the exhaust gas which has passed through only the first half portion of the NOx storage reduction catalyst.

Accordingly, in the apparatus disclosed in Japanese Patent Application Publication No. JP-A-11-107828, storage and reduction of NOx performed by the second half portion of the NOx storage reduction catalyst are not controlled in actuality. Therefore, there is a problem that the NOx storage ability of the second half portion is not effectively utilized.

For example, when an amount of NOx generated in the engine increases, for example, when the engine is being operated at high load, the NOx storage ability of the entire NOx storage reduction catalyst including not only the first half portion but also the second half portion needs to be efficiently utilized. In the apparatus disclosed in Japanese Patent Application Publication No. JP-A-11-107828, however, the NOx storage ability of the second half portion cannot be efficiently utilized even in such a case.

In the apparatus disclosed in Japanese Patent Application Publication No. JP-A-11-107828, the first half portion and the second half portion of the NOx storage reduction catalyst have identically the same characteristics. However, by making the characteristics of the catalyst such as the NOx storage ability and oxygen storage ability different between the first half portion and the second half portion, a NOx reduction ratio of the entire NOx storage reduction catalyst can be further improved.

Document EP 1138898 A2 discloses an exhaust gas purification device comprising two parallel arranged NOx storage reduction catalysts and further downstream of these NOx storage reduction catalysts a three-way catalyst. The three-way catalyst shall have a high oxygen storage capacity and is provided downstream of the NOx storage reduction catalyst to oxide unburned carbon hydrogen and unburned carbon monoxide components which might pass the NOx storage reduction catalyst, in case a reducing agent which is used to achieve a reduction of NOx stored by the NOx storage reduction catalyst has not been completely oxidised by the NOx storage reduction catalyst. Thus, by the provided three-way catalyst it shall be avoided that a reducing agent not completely oxidised by the NOx storage reduction catalyst leaves the system unconverted. For the control of the device downstream of NOx storage reduction catalyst, NOx sensors are provided and downstream of the three-way catalyst a lamda-sensor is provided.

### SUMMARY OF THE INVENTION

It is an object of the invention to provide an exhaust gas control apparatus and method for an internal combustion engine, which can improve a NOx reduction ratio in every load region of an engine by efficiently utilizing a NOx storage ability of an entire so-called "tandem" NOx storage reduction catalyst in which two or more NOx storage reduction catalysts are provided in series in an exhaust passage.

According to a first aspect of the invention, there is provided an exhaust gas control apparatus for an internal combustion engine, including a NOx storage reduction catalyst which stores NOx in exhaust gas by adsorbing and/or absorbing the NOx when an air-fuel ratio of the exhaust gas flowing therein is lean, and which reduces the stored NOx using reducing components in the exhaust gas when the air-fuel ratio of the exhaust gas flowing therein is rich. The exhaust gas control apparatus includes an upstream side NOx storage reduction catalyst which is provided in an exhaust passage of an internal combustion engine; a downstream side NOx storage reduction catalyst which is provided in the exhaust passage at a position downstream from the upstream side NOx storage reduction catalyst; an upstream side NOx sensor which is provided in the exhaust passage at a position between the upstream side NOx storage reduction catalyst and the downstream side NOx storage reduction catalyst and which detects a NOx concentration in the exhaust gas; and a downstream side NOx sensor which is provided in the exhaust passage at a position downstream from the downstream side NOx storage reduction catalyst and which detects the NOx concentration in the exhaust gas.

In the first aspect, when a rich spike operation for reducing the NOx stored in the NOx storage reduction catalyst is performed by temporarily changing the air-fuel ratio of the exhaust gas flowing in the upstream side NOx storage reduction catalyst from a lean air-fuel ratio to a rich air-fuel ratio, one of the upstream side NOx sensor and the downstream side NOx sensor is selected according to an engine load, and the start time of the rich spike operation may be decided based on the NOx concentration in the exhaust gas detected by the selected NOx sensor.

In the first aspect, one of the upstream side NOx sensor and the downstream side NOx sensor may be selected according to an engine load.

In the first aspect, the rich spike operation is performed, when the engine load is in one of a low load region and a medium load region, the upstream side NOx sensor may be selected, and when the engine load is in a high load region, the downstream side NOx sensor may be selected.

Namely, in the first aspect, a NOx sensor is provided in an outlet of each of the upstream side NOx storage reduction catalyst and the downstream side NOx storage reduction catalyst of the tandem NOx storage deduction catalyst including the upstream side NOx storage reduction catalyst and the downstream side NOx storage reduction catalyst. The start time of the rich spike operation is decided based on the NOx concentration in the exhaust gas detected by the NOx sensor. The NOx sensor to be used for deciding the start time of the rich spike operation is selected according to an engine load condition.

For example, when the engine load is in the low load region or the medium load region, and the amount of NOx generated in the engine is relatively small, the start time of the rich spike operation is decided based on the output from the upstream side NOx sensor. For example, when the rich spike operation is performed each time the NOx concentration in the outlet of the upstream side NOx storage reduction catalyst, which is detected by the upstream side NOx sensor, reaches a predetermined value, the rich spike operation based on the amount of NOx stored in the upstream side NOx storage reduction catalyst is performed, and reduction of NOx is performed using mainly the upstream side NOx storage reduction catalyst.

In this case, storage of NOx is performed mainly by the upstream side NOx storage reduction catalyst. Therefore, even when the amount of NOx stored in the upstream side NOx storage reduction catalyst increases and the rich spike operation is started, the amount of NOx stored in the downstream side NOx storage reduction catalyst is relatively small and the downstream side NOx storage reduction catalyst can still store NOx sufficiently.

Accordingly, even when unreduced NOx is released from the upstream side NOx storage reduction catalyst in the early stages of the rich spike operation, the unreduced NOx is re-stored in the downstream side NOx storage reduction catalyst. As a result, the unreduced NOx is prevented from being released into the atmosphere.

When the engine is being operated in the high load region and the amount of NOx generated in the engine is increasing, the start time of the rich spike operation is decided based on the output from the downstream side NOx sensor. For example, when the rich spike operation is performed each time the NOx concentration in the outlet of the downstream side NOx storage reduction catalyst, which is detected by the downstream side NOx sensor, reaches a predetermined value, storage and reduction of NOx can be performed in both the upstream side NOx storage reduction catalyst and the downstream side NOx storage reduction catalyst. Therefore, even when the amount of NOx generation is large, reduction of NOx can be performed while the NOx storage abilities of both of the NOx storage reduction catalysts are sufficiently utilized.

In the first aspect, one of the upstream side NOx sensor and the downstream side NOx sensor may be selected based on the NOx concentrations detected by the upstream side NOx sensor and the downstream side NOx sensor.

In the exhaust gas control apparatus according to the second aspect, when the engine is being operated in a low load region or a medium load region, the NOx concentration in the exhaust gas, which is detected by the upstream side NOx sensor, may be compared with the NOx concentration in the exhaust gas, which is detected by the downstream side NOx sensor, the NOx sensor which has detected the higher NOx concentration be selected, and the start time of the rich spike operation be decided based on the NOx concentration in the exhaust gas detected by the selected NOx sensor; and when the engine is being operated in a high load region, the start time of the rich spike operation be decided based on the NOx concentration in the exhaust gas detected by the downstream side NOx sensor.

Namely, in the second aspect, a NOx sensor is provided in an outlet of each of the upstream side NOx storage reduction catalyst and the downstream side NOx storage reduction catalyst of the tandem NOx storage deduction catalyst including the upstream side NOx storage reduction catalyst and the downstream side NOx storage reduction catalyst. When the engine is being operated in the low or medium load region, one of the upstream side NOx sensor and the downstream side NOx sensor is selected based on the exhaust gas NOx concentrations detected by these NOx sensors, and the start time of the rich spike operation is decided based on the output from the selected NOx sensor.

Thus, the rich spike operation can be performed at appropriate time according to the NOx storage states of both the upstream side NOx storage reduction catalyst and the downstream side NOx storage reduction catalyst of the tandem NOx storage reduction catalyst.

For example, in the low or medium load operation region, even when the amount of NOx stored in the upstream side NOx storage reduction catalyst increases and the NOx concentration in the exhaust gas in the outlet of the upstream side NOx storage reduction catalyst increases, normally, the amount of NOx stored in the downstream side NOx storage reduction catalyst is small. Accordingly, the NOx released from the upstream side NOx storage reduction catalyst is re-stored in the downstream side NOx storage reduction catalyst, and NOx concentration in the exhaust gas in the outlet of the downstream side NOx storage reduction catalyst becomes substantially "0".

Normally, the NOx concentration detected by the downstream side NOx sensor is substantially "0". Therefore, by starting the rich spike operation, for example, when the NOx concentration detected by the upstream side NOx sensor reaches a predetermined determination value, based on the NOx concentration detected by the upstream side NOx sensor, storage and reduction of NOx are performed appropriately using the upstream side NOx storage reduction catalyst.

The downstream side NOx storage reduction catalyst stores the NOX released from the upstream side NOx storage reduction catalyst. However, in a NOx storage and reduction cycle of the upstream side NOx storage reduction catalyst based on the output from the upstream side NOx sensor, the NOx stored in the downstream side NOx storage reduction catalyst is not always reduced. Therefore, there is a possibility that the amount of NOx stored in the downstream side NOx storage reduction catalyst gradually increases.

For example, when the amount of NOx stored in the downstream side NOx storage reduction catalyst increases and the NOx concentration detected by the downstream side NOx sensor becomes higher than the NOx concentration detected by the upstream side NOx sensor, the rich spike operation is performed based on the NOx concentration detected by the downstream side NOx sensor. Thus, the NOx stored in the downstream side NOx storage reduction catalyst is reduced at appropriate time, and unreduced NOx is prevented from being released from the downstream side NOx storage reduction catalyst.

Namely, when the engine is being operated in the low or medium load region, unreduced NOx is effectively prevented from being released to the atmosphere by deciding the start time of the rich spike operation based on the NOx concentration in the exhaust gas, which is detected by the NOx sensor that has detected the higher NOx concentration.

In addition, by deciding the start time of the rich spike operation based on the NOx concentration in the exhaust gas, which is detected by the downstream side NOx sensor when the engine is being operated in the high load region, reduction of NOx can be performed while the NOx storage abilities of both the upstream side NOx storage reduction catalyst and the downstream side NOx storage reduction catalyst are sufficiently utilized when the amount of NOx generated in the engine is large.

In the exhaust gas control apparatus according to the first and second aspects, there may be further provided an upstream side air-fuel ratio sensor which is provided in the exhaust passage at a position between the upstream side NOx storage reduction catalyst and the downstream side NOx storage reduction catalyst and which detects an air-fuel ratio of the exhaust gas; a downstream side air-fuel ratio sensor which is provided in the exhaust passage at a position downstream from the downstream side NOx storage reduction catalyst and which detects an air-fuel ratio of the exhaust gas. In the exhaust gas control apparatus, when the rich spike operation is started based on the NOx concentration detected by the upstream side NOx sensor, the end time of the rich spike operation may be decided based on the air-fuel ratio of the exhaust gas detected by the upstream side air-fuel ratio sensor. When the rich spike operation is started based on the NOx concentration detected by the downstream side NOx sensor, the end time of the rich spike operation may be decided based on the air-fuel ratio of the exhaust gas detected by the downstream side air-fuel ratio sensor.

Namely, in the first and second aspects, the upstream side air-fuel ratio sensor paired with the upstream side NOx sensor, and the downstream side air-fuel ratio paired with the downstream side NOx sensor are further provided. The end time of the rich spike operation is decided based on the air-fuel ratio detected by the air-fuel ratio sensor which is paired with the NOx sensor used to decide the start time of the rich spike operation. Thus, the rich spike operation based on the NOx storage state of each of the upstream side NOx storage reduction catalyst and the downstream side NOx storage reduction catalyst is performed. As a result, the NOx stored in the catalyst is efficiently reduced.

In the first and second aspects, each of the upstream side NOx storage reduction catalyst and the downstream side NOx storage reduction catalyst may have an oxygen storage ability of absorbing oxygen in the exhaust gas when the air-fuel ratio of the exhaust gas is lean and releasing the absorbed oxygen when the air-fuel ratio of the exhaust gas is rich. The oxygen storage ability of the downstream side NOx storage reduction catalyst may be made higher than the oxygen storage ability of the upstream side NOx storage reduction catalyst. When the rich spike operation is started based on the NOx concentration detected by the downstream side NOx sensor, first, the NOx stored in the upstream side NOx storage reduction catalyst may be reduced, and then the NOx stored in the downstream side NOx storage reduction catalyst may be reduced. Also, when the NOx stored in the downstream side NOx storage reduction catalyst is reduced, the air-fuel ratio of the exhaust gas flowing in the upstream side NOx storage reduction catalyst during the rich spike operation may be set to be low as compared to when the NOx stored in the upstream side NOx storage reduction catalyst is reduced.

Namely, in the first and second aspects, each of the upstream side NOx storage reduction catalyst and the downstream side NOx storage reduction catalyst has the oxygen storage ability, and the oxygen storage ability of the upstream side NOx storage reduction catalyst is lower than the oxygen storage ability of the downstream side NOx storage reduction catalyst. Accordingly, in the upstream side NOx storage reduction catalyst, the amount of components such as HC and CO contained in the exhaust gas, which are not used for reduction of NOx and which are unnecessarily consumed, is reduced by oxygen released from the catalyst in early stages of the rich spike operation. As a result, reduction of the NOx stored in the NOx storage reduction catalyst is efficiently performed in a short time.

Thus, when the amount of the NOx generated in the engine is relatively small, for example, when the engine is being operated in the low or medium load region, by performing the rich spike operation based on the NOx concentration in the exhaust gas detected by the upstream side NOx sensor, storage and reduction of the NOx in the exhaust gas can be performed using mainly the upstream side NOx storage reduction catalyst.

On the other hand, when the amount of the NOx generated in the engine is relatively large, for example, when the engine is being operated in the high load region, by performing the rich spike operation based on the NOx concentration in the exhaust gas detected by the downstream side NOx sensor, storage and reduction of the NOx are performed using both the upstream side NOx storage reduction catalyst and the downstream side NOx storage reduction catalyst, whereby the NOx storage ability can be enhanced in total. In this case, the NOx stored in both the upstream side NOx storage reduction catalyst and the downstream side NOx storage reduction catalyst needs to be reduced during the rich spike operation.

In this case, when the air-fuel ratio of exhaust gas is made rich during the rich spike operation, the NOx stored in the upstream side NOx storage reduction catalyst is initially reduced. After this reduction ends, the NOx stored in the downstream side NOx storage reduction catalyst is reduced.

However, the downstream side NOx storage reduction catalyst has a higher oxygen storage ability than that of the upstream side NOx storage reduction catalyst. Accordingly, if the NOx stored in the downstream side NOx storage reduction catalyst is reduced using the exhaust gas having the air-fuel ratio which is the same as that of the exhaust gas for the upstream side NOx storage reduction catalyst, there is a possibility that the NOx stored in the downstream side NOx storage reduction catalyst is not reduced sufficiently.

Therefore, when the NOx stored in the downstream side NOx storage reduction catalyst is reduced, the air-fuel ratio of the exhaust gas is made rich (low) as compared to when the NOx stored in the upstream side NOx storage reduction catalyst is reduced. Thus, reduction of the NOx stored in the downstream side NOx storage reduction catalyst is performed appropriately.

In the first and second aspects, each of the upstream side NOx storage reduction catalyst and the downstream side NOx storage reduction catalyst may have the oxygen storage ability of absorbing oxygen in the exhaust gas when the air-fuel ratio of the exhaust gas is lean and releasing the absorbed oxygen when the air-fuel ratio of the exhaust gas is rich. The oxygen storage ability of the downstream side NOx storage reduction catalyst may be made higher than the oxygen storage ability of the upstream side NOx storage reduction catalyst. Also, the NOx storage ability of the upstream side NOx storage reduction catalyst may made higher than the NOx storage ability of the downstream side NOx storage reduction catalyst.

Namely, in the first and second aspects, the oxygen storage ability of the upstream side NOx storage reduction catalyst is lower than the oxygen storage ability of the downstream side NOx storage reduction catalyst. Also the NOx storage ability of the upstream side NOx storage reduction catalyst is higher than the NOx storage ability of the downstream side NOx storage reduction catalyst.

As mentioned above, by making the oxygen storage ability of the NOx storage reduction catalyst low, the amount of HC and CO components contained in the exhaust gas having a rich air-fuel ratio, which are to be unnecessarily consumed, is reduced. As a result, the NOx stored in the NOx storage reduction catalyst can be reduced efficiently.

In the tandem NOx storage reduction catalyst, there are many cases where mainly the upstream side NOx storage reduction catalyst stores and reduces NOx. Accordingly, by making the oxygen storage ability of the upstream side NOx storage reduction catalyst relatively low, and the NOx storage ability of the upstream side NOx storage reduction catalyst relatively high, the amount of the NOx processed in the upstream side NOx storage reduction catalyst, which can reduce NOx efficiently, can be increased. As a result, a NOx reduction ratio as the entire tandem NOx storage reduction catalyst can be enhanced.

According to the above-mentioned aspects, in the exhaust gas control apparatus including the tandem NOx storage reduction catalyst in which two or more NOx storage reduction catalysts are provided in series in the exhaust passage, by efficiently utilizing the NOx storage abilities of all the NOx storage reduction catalysts, the NOx reduction ratio can be entirely enhanced in all the engine load regions.

According to a second aspect of the invention, there is provided the exhaust gas control method for an internal combustion engine, including i) a NOx storage reduction catalyst which includes an upstream side NOx storage reduction catalyst that is provided in an exhaust passage of the internal combustion engine and a downstream side NOx storage reduction catalyst that is provided in the exhaust passage at a position downstream from the upstream side NOx storage reduction catalyst, and which stores NOx in exhaust gas by adsorbing and/or absorbing the NOx when an air-fuel ratio of the exhaust gas flowing in the NOx storage reduction catalyst is lean, and which reduces the stored NOx using reducing components in the exhaust gas when the air-fuel ratio of the exhaust gas flowing in the NOx storage reduction catalyst is rich, ii) an upstream side NOx sensor which is provided in the exhaust passage at a position between the upstream side NOx storage reduction catalyst and the downstream side NOx storage reduction catalyst and which detects a NOx concentration in the exhaust gas, and iii) a downstream side NOx sensor which is provided in the exhaust passage at a position downstream from the downstream side NOx storage reduction catalyst and which detects the NOx concentration in the exhaust gas characterized by comprising the steps of selecting one of the upstream side NOx sensor and the downstream side NOx sensor when a rich spike operation for reducing the NOx stored in the NOx storage reduction catalyst is performed by temporarily changing the air-fuel ratio of the exhaust gas flowing in the upstream side NOx storage reduction catalyst from a lean air-fuel ratio to a rich air-fuel ratio and deciding start time of the rich spike operation based on a NOx concentration in the exhaust gas detected by the selected NOx sensor.

In the second aspect, one of the upstream side NOx sensor and the downstream side NOx sensor is selected according to the engine load.

In the second aspect, one of the upstream side NOx sensor and the downstream side NOx sensor is selected based on the NOx concentrations detected by the upstream side NOx sensor and the downstream side NOx sensor.

### BRIEF DESCRIPTION OF THE DRAWINGS

The foregoing and further objects, features and advantages of the invention will become apparent from the following description of preferred embodiments with reference to the accompanying drawings, wherein like numerals are used to represent like elements and wherein:
FIG. 1 is a view schematically showing a structure of an exhaust gas control apparatus according to an embodiment of the invention, when the exhaust gas control apparatus is applied to an internal combustion engine for an automobile;
FIG. 2 is a sectional view showing a structure of a converter 70 in the embodiment shown in FIG. 1;
FIG. 3 is a flowchart for describing an example of a rich spike operation in the exhaust gas control apparatus according to the invention;
FIG. 4 is a flowchart for describing another example of a rich spike operation in the exhaust gas control apparatus according to the invention;
FIG. 5 is a time chart showing a change in an air-fuel ratio of exhaust gas in an outlet of each NOx storage reduction catalyst during the rich spike operation;
FIG. 6 is a time chart showing a change in the air-fuel ratio of the exhaust gas in the outlet of each NOx storage reduction catalyst during the rich spike operation;
FIG. 7 is a time chart showing a change in the air-fuel ratio of the exhaust gas in the outlet of each NOx storage reduction catalyst during the rich spike operation; and
FIG 8 is a time chart showing a change in the air-fuel ratio of the exhaust gas in the outlet of each NOx storage reduction catalyst during the rich spike operation.

### DETAILED DESCRIPTION OF THE PREFERRED EMBODIMENTS

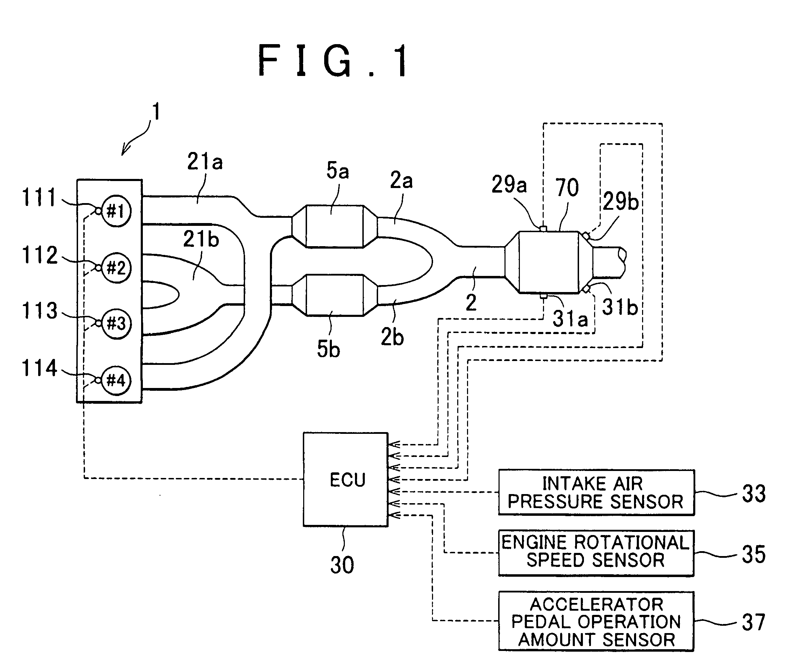

Hereafter, an embodiment of the invention will be described in detail with reference to accompanying drawings. FIG. 1 is a view schematically showing a structure of an exhaust gas control apparatus according to an embodiment of the invention, when the exhaust gas control apparatus is applied to an internal combustion engine for an automobile.

In the embodiment, the engine 1 is a four-cylinder gasoline engine including four cylinders #1 to #4 as described in FIG. 1. A fuel injection valve 111 which directly injects fuel into the cylinder is provided for the cylinder #1. Similarly, fuel injection valves 112 to 114 are provided for the cylinders #2 to #4, respectively. As will be described later, the internal combustion engine 1 in the embodiment is a lean burn engine which can be operated at an air-fuel ratio higher than the stoichiometric air-fuel ratio (i.e., at a lean air-fuel ratio).

In the embodiment, the cylinders #1 to #4 are classified into two cylinder groups each of which includes two cylinders whose ignition times are not successive. (For example, in the embodiment shown in FIG. 1, the firing order is "1-3-4-2", and the cylinders #1 and #4 constitute one cylinder group, and the cylinders #2 and #4 constitute the other cylinder group.) Exhaust ports of cylinders in the same cylinder group are connected to an exhaust manifold, and connected to an exhaust passage for the cylinder group.

An exhaust manifold 21a which connects an exhaust port of the cylinder group including the cylinders #1 and #4 to an individual exhaust passage 2a, and an exhaust manifold 21b which connects an exhaust port of the cylinder group including the cylinders "#2 and "#4" to an individual exhaust passage 2b as described in FIG. 1. In the embodiment, start catalysts (hereinafter, simply referred to as "SC") 2a and 2b, each of which is a three way catalyst, are provided to the individual exhaust passages 2a and 2b, respectively. The individual exhaust passages 2a and 2b join a common exhaust passage 2 at a portion downstream from the SCs.

The exhaust passage 2 is provided with a converter 70 constituted by housing an after-mentioned NOx storage reduction catalyst 7 in a casing.

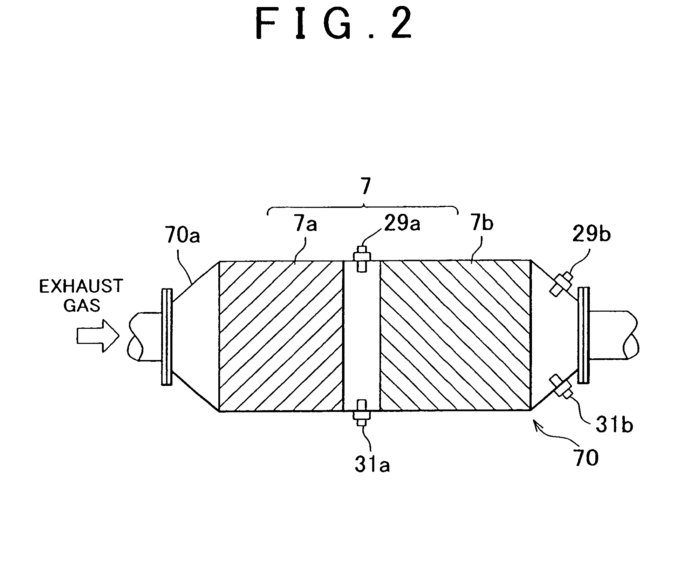

FIG. 2 is a sectional view showing a structure of the converter 70 in the embodiment. The converter 70 is constituted by housing the NOx storage reduction catalyst 7 in a casing 70a. In the embodiment, the NOx storage reduction catalyst 7 is a so-called tandem NOx storage reduction catalyst including an upstream side NOx storage reduction catalyst 7a and a downstream side NOx storage reduction catalyst 7b which is provided downstream from the upstream side NOx storage reduction catalyst 7a with a certain clearance.

As shown in FIG. 1, in the embodiment, there are provided an upstream side NOx sensor 29a and an upstream side air-fuel ratio sensor 31a which respectively detect a NOx concentration and an air-fuel ratio of the exhaust gas that has passed through the upstream side NOx storage reduction catalyst 7a, between the upstream side NOx storage reduction catalyst 7a and the downstream side NOx storage reduction catalyst 7b.

In the exhaust passage of an outlet of the converter 70, there are provided a downstream side NOx sensor 29b and a downstream side air-fuel ratio sensor 31b which respectively detect a NOx concentration and an air-fuel ratio of the exhaust gas that has passed through the downstream side NOx storage reduction catalyst 7b.

In the embodiment, each of the air-fuel ratio sensors 31a and 31b is a so-called linear air-fuel ratio sensor which outputs a voltage signal corresponding to an air-fuel ratio of the exhaust gas in a broad air-fuel ratio region. Instead of a linear air-fuel ratio sensor, an O₂ sensor having so-called Z-form output characteristics, which detects and oxygen concentration in the exhaust gas and whose output abruptly changes at the stoichiometric air-fuel ratio.

An electronic control unit (ECU) 30 of the engine 1 as shown in FIG. 1 is a known microcomputer including RAM, ROM and a CPU, and performs basic control of the engine 1, such as ignition time control and fuel injection control. In the embodiment, in addition to performing the basic control, the ECU 30 performs the rich spike operation. In the rich spike operation, the amount of fuel injected each of the cylinder injection valves 111 to 114 is changed during the operation at a lean air-fuel ratio based on the engine load state and the NOx storage states of the NOx storage reduction catalysts 7a and 7b, and the engine is operated at a rich air-fuel ratio for a short time.

In order to perform the above-mentioned controls, a signal corresponding to an intake air pressure of the engine transmitted from an intake air pressure sensor 33 provided in an engine intake air manifold (not shown), a signal corresponding to an engine rotational speed transmitted from an engine rotational speed sensor 35 provided near an engine crank shaft (not shown), and a signal indicative of an accelerator pedal operation amount by a driver transmitted from an accelerator pedal operation amount sensor 37 provided near an accelerator pedal (not shown) of the engine 1 are input in an input port of the ECU 30. In addition, a NOx concentration and an air-fuel ratio of the exhaust gas in the outlet of the upstream side NOx storage reduction catalyst 7a transmitted respectively from the upstream side NOx sensor 29a and the upstream side air-fuel ratio sensor 31 a are input in the input in the input port of the ECU 30. Also, a NOx concentration and an air-fuel ratio of the exhaust gas in the outlet of the downstream side NOx storage reduction catalyst 7b transmitted respectively from the downstream side NOx sensor 29b and the downstream side air-fuel ratio sensor 31b are input in the input port of the ECU 30. An output port of the ECU 30 is connected each of the fuel injection valves 111 to 114 for the cylinders via a fuel injection circuit (not shown) in order to control an amount of fuel to be injected to each cylinder and fuel injection time.

Next, the NOx storage reduction catalyst 7 (7a, 7b) in the embodiment will be described. The NOx storage reduction catalyst 7 in the embodiment is configured by forming an alumina coating on a carrier such as a cordierite formed in a honeycomb shape, and supporting at least one component selected from alkali metal such as kalium K, sodium Na, lithium Li, and cesium Cs; alkali earth such as barium Ba, and calcium Ca; and rare earth such as lanthanum La, cerium Ce, and yttrium Y; and precious metal such as platinum Pt on the alumina coating. The NOx storage reduction catalyst performs storage/release action. Namely, the NOx storage reduction catalyst stores NOx (NO₂, NO) in the exhaust gas as a form of nitrate ion NO₃⁻ when an air-fuel ratio of exhaust gas flowing therein is lean, and releases the stored NOx when an oxygen concentration in the exhaust gas flowing therein decreases.

For example, when the engine 1 is operated at a lean air-fuel ratio and the air-fuel ratio of exhaust gas flowing in the NOx storage reduction catalyst 7 is lean, NOx (NO) in the exhaust gas is oxidized on platinum Pt and becomes NO₂, and further oxidized and generates nitrate ion. For example, when BaO is used as an absorbent, the nitrate ion is absorbed in the absorbent and is diffused in the absorbent as a form of nitrate ion NO₃⁻ while combining with barium oxide BaO. Accordingly, in the lean atmosphere, NOx in exhaust gas is stored in the NOx absorbent as a form of nitrate salt.

When the oxygen concentration in the exhaust gas flowing there in is drastically decreases (namely, the air-fuel ratio of the exhaust gas becomes the stoichiometric air-fuel ratio or a rich air-fuel ratio), the amount of nitrate ion generated on platinum Pt decreases. Therefore, reaction proceeds reversely, and the nitrate ion NO₃⁻ in the absorbent is released from the absorbent in the form of NO₂. In this case, if there are components such as CO and H₂ that serve as a reducing agent or HC components (hereinafter, referred to as "reducing components and the like"), NO₂ is reduced on platinum Pt by these components.

In the embodiment, in order to make the NOx storage reduction catalyst release and reduce the stored NOx, the rich spike operation for operating the engine 1 at a rich air-fuel ratio for a short time is performed, and exhaust gas having a rich air-fuel ratio is supplied to the NOx storage reduction catalyst.

In the embodiment, the start time of the rich spike operation is decided based on the NOx concentration in the exhaust gas detected by the NOx sensor provided in the NOx storage reduction catalyst 7.

Namely, as the amount of NOx stored in the NOx storage reduction catalyst increases, the amount of NOx which is not stored and passes through the catalyst increases, and the NOx concentration in the exhaust gas in the outlet of the NOx storage reduction catalyst increases. When the NOx storage reduction catalyst stores NOx to saturation, it becomes completely impossible for the NOx storage reduction catalyst to store the NOx in the exhaust gas.

Therefore, in the embodiment, the NOx concentration in the exhaust gas in the outlet of the catalyst is detected by the NOx sensors 29a and 29b provided in the outlet of each NOx storage reduction catalyst, and each time the detected NOx concentration reaches a predetermined determination value, the rich spike operation is performed, and the NOx stored in the NOx storage reduction catalyst is reduced.

When NOx is released from the NOx storage reduction catalyst and reacts with the reducing components and the like in the exhaust gas during the rich spike operation, the reducing components and the like in the exhaust gas react with NOx and oxidized. Accordingly, while NOx is released from the NOx storage reduction catalyst and reduced, the air-fuel ratio of the exhaust gas passing through the NOx storage reduction catalyst increases, and the air-fuel ratio of the exhaust gas in the outlet of the catalyst becomes leaner than the air-fuel ratio of the exhaust gas in the inlet of the catalyst. Also, when the entire amount of the stored NOx is released from the NOx storage reduction catalyst and reduction of NOx ends, the air-fuel ratio of the exhaust gas in the outlet of the catalyst decreases to an air-fuel ratio substantially equal to the air-fuel ratio of the exhaust gas in the inlet.

In the embodiment, when the air-fuel ratio of the exhaust gas detected by the air-fuel ratio sensors 31a and 31b provided in the outlet of the NOx storage reduction catalyst decreases to a predetermined air-fuel ratio which is decided by the air-fuel ratio of the exhaust gas during the rich spike operation, the rich spike operation ends. Thus, when reduction of the NOx stored in the NOx storage reduction catalyst ends, the rich spike operation can be completed. It is therefore possible to prevent the rich spike operation from being performed more than necessary.

Namely, in the embodiment, the start time of the rich spike operation is decided based on the NOx concentration in the exhaust gas in the outlet of the catalyst, which is detected by the NOx sensors (29a, 29b), and the end time of the rich spike operation is decided based on the air-fuel ratio of the exhaust gas in the outlet of the catalyst, which is detected by the air-fuel ratio sensors (31a, 31b).

Next, an oxygen storage ability of the NOx storage reduction catalysts 7a and 7b will be described. In the embodiment, metal components such as cerium Ce as oxygen storage components, in addition to the NOx storage reduction catalyst components, are supported on the alumina coating of the carrier, whereby the oxygen storage ability (O₂ storage ability) is provided.

When the air-fuel ratio of the exhaust gas flowing in the catalyst is higher than the stoichiometric air-fuel ratio (when the air-fuel ratio of the exhaust gas is lean), the cerium supported on the alumina coating is combined with the oxygen in the exhaust gas, forms cerium oxide IV: CeO₂, and stores oxygen. On the other hand, when the air-fuel ratio of the exhaust gas flowing in the catalyst is equal to or lower than the stoichiometric air-fuel ratio (when the air-fuel ratio of the exhaust gas is rich), the cerium oxide IV releases oxygen in order to become cerium oxide III (Ce₂O₃).

Namely, the oxygen storage components perform O₂ storage action for storing the oxygen in the exhaust gas when the air-fuel ratio of the exhaust gas flowing in the catalyst in lean, and releasing the oxygen into the exhaust gas when the air-fuel ratio of the exhaust gas flowing in the catalyst becomes rich.

Accordingly, for example, when the air-fuel ratio changes from a lean air-fuel ratio to a rich air-fuel ratio, oxygen is released from the oxygen storage components. Therefore, even after the air-fuel ratio of the exhaust gas flowing in the catalyst changes to a rich air-fuel ratio, the air-fuel ratio in the catalyst does not become a rich air-fuel ratio and maintained in an atmosphere near the stoichiometric air-fuel ratio while oxygen is released.

For example, when the oxygen storage abilities of the upstream side NOx storage reduction catalyst 7a and the downstream side NOx storage reduction catalyst 7b are respectively set to the maximum amounts of oxygen which the catalysts 7a and 7b can store (release), in the embodiment, the oxygen storage ability of the downstream side NOx storage reduction catalyst 7b is made higher than the oxygen storage ability of the upstream side NOx storage reduction catalyst 7a (the oxygen storage ability of the upstream side NOx storage reduction catalyst 7a is made lower than the oxygen storage ability of the downstream side NOx storage reduction catalyst 7b) by adjusting the support amount of the oxygen storage components.

Similarly, when the NOx storage abilities of the upstream side NOx storage reduction catalyst 7a and the downstream side NOx storage reduction catalyst 7b are respectively set to the maximum amounts of NOx which the upstream side NOx storage reduction catalyst 7a and the downstream side NOx storage reduction catalyst 7b can store, in the embodiment, the NOx storage ability of the upstream side NOx storage reduction catalyst 7a is made higher than the NOx storage ability of the downstream side NOx storage reduction catalyst 7b by adjusting the support amount of the catalyst components.

Next, the reasons why the oxygen storage ability and the NOx storage ability are made different between the upstream side NOx storage reduction catalyst and the downstream side NOx storage reduction catalyst will be described.

### (1) oxygen storage ability (O₂ storage ability)

The reasons why the O₂ storage ability of the upstream side NOx storage reduction catalyst is made lower than the O₂ storage ability of the downstream side NOx storage reduction catalyst (the O₂ storage ability of the downstream side NOx storage reduction catalyst is made higher than the O₂ storage ability of the upstream side NOx storage reduction catalyst) are as follows.
(a) To increase efficiency of reduction of NOx stored in the upstream side NOx storage reduction catalyst.
(b) To prevent release of unreduced NOx in the early stages of the rich spike operation.

When the air-fuel ratio of the exhaust gas is changed from a lean air-fuel ratio to a rich air-fuel ratio during the rich spike operation, the exhaust gas having a rich air-fuel ratio flows in the NOx storage reduction catalyst. However, if the NOx storage reduction catalyst O₂ has the O₂ storage ability, oxygen is released from the NOx storage reduction catalyst when the air-fuel ratio is changed to a rich air-fuel ratio. Therefore, even when the air-fuel ratio of the exhaust gas is changed from a lean air-fuel ratio to a rich air-fuel ratio during the rich spike operation, the reducing components such as CO and H₂ contained in the exhaust gas are oxidized due to oxygen released from the oxygen storage components while oxygen is released from the NOx storage reduction catalyst, and the air-fuel ratio in the NOx storage reduction catalyst is maintained at an air-fuel ratio near the stoichiometric air-fuel ratio in the early stages of the rich spike operation.

Meanwhile, NOx is released from the NOx storage reduction catalyst in accordance with a decrease in the air-fuel ratio. However, the reducing components and the like contained in the exhaust gas flowing in the NOx storage reduction catalyst are oxidized due to the oxygen released from the oxygen storage components. Accordingly, the reducing components required for reduced the released NOx becomes insufficient in the catalyst.

Therefore, in the case where the NOx storage reduction catalyst has O2 storage, along with the exhaust gas, the released NOx flows out of the catalyst without being reduced, after the rich spike operation is started until release of oxygen from the catalyst is completed. Also, while oxygen is released from the catalyst after the rich spike operation is started, the reducing components and the like in the exhaust gas flowing in the catalyst are not used for reduction of NOx, and react with the oxygen released from the catalyst, and therefore consumed unnecessarily.

In the embodiment, the O₂ storage ability of the upstream side NOx storage reduction catalyst is made relatively low, and the amount of oxygen, which is released from the upstream side NOx storage reduction catalyst when the rich spike operation is started, is reduced. It is therefore possible to efficiently perform reduction of the stored NOx in a short time by reducing the amount of the reducing agent components and the like which are to be unnecessarily consumed during the rich spike operation. It is also possible to reduce the amount of unreduced NOx flowing out of the upstream side NOx storage reduction catalyst in the early stages of the rich spike operation.

Meanwhile, normally, NOx in the exhaust gas is initially stored in the upstream side NOx storage reduction catalyst while the engine is operated a lean air-fuel ratio. Therefore, even when the amount of NOx stored in the upstream side NOx storage reduction catalyst increases, the amount of NOx stored in the downstream side NOx storage reduction catalyst is relatively small, and the downstream side NOx storage reduction catalyst can sufficiently store NOx in the exhaust gas.

In the embodiment, the O₂ storage ability of the downstream side NOx storage reduction catalyst is made higher than that of the upstream side NOx storage reduction catalyst. Therefore, even when the exhaust gas which has passed through the upstream side NOx storage reduction catalyst flows in the downstream side NOx storage reduction catalyst in the early stages of the rich spike operation, the air-fuel ratio in the downstream side NOx storage reduction catalyst does not considerably decrease. Therefore, the unreduced NOx, which is released from the upstream side NOx storage reduction catalyst in the early stages of the rich spike operation, is re-stored in the downstream side NOx storage reduction catalyst. Accordingly, the unreduced NOx is prevented from releasing to the downstream side of the converter 70.

Namely, by making the O₂ storage ability of the upstream side NOx storage reduction catalyst lower than that of the downstream side NOx storage reduction catalyst (that is, by making the O₂ storage reduction ability of the downstream side NOx storage reduction catalyst higher than that of the upstream side NOx storage reduction catalyst), it is possible to (a) efficiently perform reduction of the NOx stored in the upstream side NOx storage reduction catalyst, and (b) prevent the unreduced NOx from being released to the atmosphere in the early stages of the rich spike operation.

### (2) NOx storage ability

The reasons why the NOx storage ability of the upstream side NOx storage reduction catalyst is made higher than that of the downstream side NOx storage reduction catalyst are as follows.

Namely, by making the O2 storage ability of the upstream side NOx storage reduction catalyst higher than that of the downstream side NOx storage reduction catalyst, efficient reduction of NOx can be performed in the upstream side NOx storage reduction catalyst. Also, normally, the NOx in exhaust gas is initially stored in the upstream side NOx storage reduction catalyst, and then stored in the downstream side NOx storage reduction catalyst after the amount of the NOx stored in the upstream side NOx storage reduction catalyst increases, and the NOx in the exhaust gas passes through the upstream side NOx storage reduction catalyst and starts flowing to the downstream side.

Accordingly, by setting the NOx storage ability of the upstream side NOx storage reduction catalyst higher than that of the downstream side NOx storage reduction catalyst, the major portion of the NOx released from the engine can be processed in the upstream side NOx storage reduction catalyst which can perform efficient reduction. Namely, by making the NOx storage ability of the upstream side NOx storage reduction catalyst of the tandem NOx storage reduction catalyst higher than that of the downstream side NOx storage reduction catalyst, NOx can be reduced efficiently in total.

However, in order to obtain the above mentioned effect to the fullest extent using the tandem NOx storage reduction catalyst, it is necessary to perform an appropriate reduction operation of the stored NOx according to the NOx storage state of each NOx storage reduction catalyst.

Accordingly, in the embodiment, the NOx sensors 29a and 29b, and the O₂ sensors 31a and 31b are provided in the outlet portion of each of the upstream side NOx storage reduction catalyst and the downstream side NOx storage reduction catalyst. By deciding the start time and the end time of the rich spike operation based on the outputs from these sensors, release of the stored NOx from each of the NOx storage reduction catalysts and a reduction operation are optimized.

For example, as described above, as the amount of NOx stored in the NOx storage reduction catalyst increases, the amount of NOx, which is not stored in the NOx storage reduction catalyst and which passes through the catalyst, increases. Accordingly, the NOx concentration in the exhaust gas on the downstream side of the catalyst is substantially "0" immediately after the rich spike operation ends (in the state where the amount of NOx stored in the NOx storage reduction catalyst is "0"). However, the NOx concentration increases as the amount of NOx stored in the catalyst increases. When the amount of NOx stored in the catalyst reaches the saturation point, and it becomes impossible for the NOx storage reduction catalyst to store NOx, the NOx concentration in the exhaust gas in the outlet of the NOx storage reduction catalyst becomes equal to the NOx concentration in the exhaust gas in the inlet of the NOx storage reduction catalyst.

In the embodiment, one of the upstream side NOx sensor 29a and the downstream side NOx sensor 29b is selected according to the circumstances. Each time the NOx concentration in the exhaust gas detected by the selected NOx sensor reaches a predetermined value, the rich spike operation is performed. The stored NOx is thus released from the NOx storage reduction catalyst, and reduced.

Also, during the rich spike operation, exhaust gas having a rich air-fuel ratio, which contains plenty of HC, CO and the like (reducing components and the like), flows in the NOx storage reduction catalyst. However, the reducing components and the like in the exhaust gas which flows in the NOx storage reduction catalyst react with the NOx released from the NOx storage reduction catalyst and are oxidized. Therefore, the air-fuel ratio of the exhaust gas increases while the exhaust gas passes through the catalyst, and becomes an air-fuel ratio near the stoichiometric air-fuel ratio in the outlet of the catalyst.

When NOx is released from the NOx storage reduction catalyst, the amount of NOx stored in the NOx storage reduction catalyst decreases, and release of the NOx ends, the air-fuel ratio of the exhaust gas which has passed through the catalyst decreases to an air-fuel ratio that is substantially equal to a rich air-fuel ratio of the exhaust gas in the inlet. Namely, release of the NOx from the NOx storage reduction catalyst, and reduction of the NOx are completed, the air-fuel ratio of the exhaust gas in the outlet of the NOx storage reduction catalyst decreases and becomes a rich air-fuel ratio.

Therefore, in the embodiment, when the air-fuel ratio of the exhaust gas in the outlet of the catalyst during the rich spike operation, which is detected by the air-fuel ratio sensor that is provided at the same position as the NOx sensor used for determination of the start time of the rich spike operation, the air-fuel ratio sensor being from among the upstream side air-fuel ratio sensor 31a and the downstream side air-fuel ratio sensor 31b, reaches a predetermined rich air-fuel ratio, it is determined that release of the NOx from the NOx storage reduction catalyst and reduction of the NOx are completed, afterwhich the rich spike operation ends.

Hereafter, embodiments of the rich spike operation will be described in detail.

### (1) First embodiment

In the embodiment, a method for determining the start time and the end time of the rich spike operation is changed according to the engine load.

In the embodiment, when the engine is operated at low or a medium load, the start time and the end time of the rich spike operation are decided based on the outputs from the upstream side NOx sensor 29a and the upstream side air-fuel ratio sensor 31a. When the engine is operated at high load, the start time and the end time of the rich spike operation are decided based on the outputs from the downstream side NOx sensor 29b and the downstream side air-fuel ratio sensor 31b.

For example, when the engine is operated in the low or medium load region, the amount of NOx generated in the engine is relatively small. Therefore, in this case, by performing reduction of NOx using mainly the upstream side NOx storage reduction catalyst 7a which has a low O₂ storage ability and which can efficiently perform reduction of NOx, efficient reduction of the NOx can be performed in total. Also, as described above, the NOx, which is released from the upstream side NOx storage reduction catalyst 7a at the start time of the rich spike operation due to the O2 storage action, is re-stored in the downstream side NOx storage reduction catalyst 7b, and is not released to the outside. Therefore, by performing storage and reduction of the NOx in the exhaust gas mainly in the upstream side NOx storage reduction catalyst 7a, NOx reduction efficiently can be enhanced in total.

Accordingly, in this case, when the output from the upstream side NOx sensor 29a reaches a predetermined value (namely, when the amount of NOx stored in the upstream side NOx storage reduction catalyst 7a increases to a predetermined value), the electronic control unit ECU 30 of the engine starts the rich spike operation. When the air-fuel ratio of the exhaust gas in the outlet of the upstream side NOx storage reduction catalyst 7a, which is detected by the upstream side air-fuel ratio sensor 31a, becomes a predetermined rich air-fuel ratio (namely, when the entire amount of the NOx stored in the upstream side NOx storage reduction catalyst 7a is released and reduced), the ECU 30 ends the rich spike operation.

Thus, the appropriate rich spike operation is performed according to the NOx storage state of the upstream side NOx storage reduction catalyst 7a, and the NOx reduction efficiency is enhanced.

Also, in the embodiment, since the NOx storage ability of the upstream side NOx storage reduction catalyst 7a is made higher than that of the downstream side NOx storage reduction catalyst 7b, the upstream side NOx storage reduction catalyst 7a can store a relatively large amount of NOx. Accordingly, even when the engine load increases to a certain extent and the amount of NOx generation increases, it is possible to perform efficient reduction of NOx using mainly the upstream side NOx storage reduction catalyst.

On the other hand, when the engine is operated at high load, the amount of NOx generated in the engine becomes relatively large. If reduction of NOx mainly using the upstream side NOx storage reduction catalyst 7a is continued even in such a case, there is a possibility that NOx storage ability becomes insufficient, and sufficient reduction of NOx cannot be performed.

Therefore, in the embodiment, when the engine is operated at high load, the amount of NOx stored in the catalysts 7a and 7b is increased using the NOx storage abilities of both the upstream side NOx storage reduction catalyst 7a and the downstream side NOx storage reduction catalyst 7b. In this case, even when the amount of NOx stored in the upstream side NOx storage reduction catalyst increases, and part of the NOx in the exhaust gas is not stored in the upstream side NOx storage reduction catalyst 7a and passes through the upstream side NOx storage reduction catalyst 7a, the NOx, which has passed through the upstream side NOx storage reduction catalyst 7a, is re-stored in the downstream side NOx storage reduction catalyst 7b and does not flow to the outside.

Accordingly, in this case, the NOx in the exhaust gas can be stored in the upstream side NOx storage reduction catalyst 7a and the downstream side NOx storage reduction catalyst 7b until the amount of NOx stored in the downstream side NOx storage reduction catalyst 7b increases. Accordingly, the NOx storage ability can be drastically increased in total.

Therefore, in this case, when the output from the downstream side NOx sensor 29b reaches a predetermined value (namely, when the NOx is stored not only in the upstream side NOx storage reduction catalyst 7a but also in the downstream side NOx storage reduction catalyst 7b, and the amount of NOx stored in the downstream side NOx storage reduction catalyst increases to a predetermined value), the electronic control unit ECU 30 of the engine starts the rich spike operation. When the air-fuel ratio of the exhaust gas in the outlet of the downstream side NOx storage reduction catalyst, which is detected by the downstream side air-fuel ratio sensor 31b, reaches a predetermined rich air-fuel ratio (namely, when the entire amount of the NOx stored in both the upstream side NOx storage reduction catalyst 7a and the downstream side NOx storage reduction catalyst 7b is released and reduced), the ECU 30 ends the rich spike operation. It is thus possible to perform the operation with the NOx reduction ability considerably increased in total. It is also possible to maintain high NOx reduction efficiency in total even when the amount of NOx generated in the engine is large.

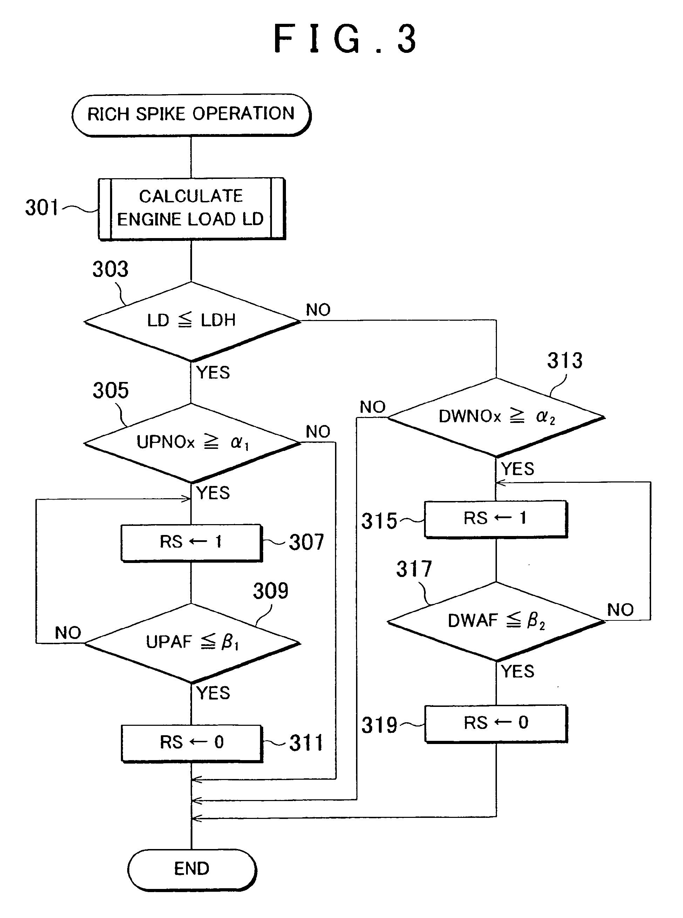

FIG. 3 is a flowchart for describing the rich spike operation in the embodiment in detail. The rich spike operation is performed by the ECU 30.

In the rich spike operation shown in FIG. 3, first, an engine load LD is read in step 301. In the embodiment, an intake air amount per one rotation of the engine is used as the engine load LD. The intake air amount per one rotation of the engine is obtained according to a relationship predetermined based on an intake air pressure detected by the intake air pressure sensor 33 and an engine rotational speed detected by the engine rotational speed sensor 35, that are values representative of the engine load. The engine load LD is calculated by an operation performed by the ECU 30 separately.

In step 303, it is determined whether the engine load LD read in step 301 is equal to or lower than a predetermined value LDH. The value LDH is an arbitrary value for determining whether the present load is high.

When it is determined in step S303 that the engine load LD is equal to or lower than the predetermined value LDH (LD ≤ LDH), the engine is presently operated in the low or medium load region. Therefore, step S305 is performed, and it is determined whether the an output UPNOx from the upstream side NOx sensor 29a provided in the outlet of the upstream side NOx storage reduction catalyst 7a has been increased to a predetermined determination value α₁.

When it is determined that the output UPNOx is equal to or higher than the determination value α₁ "UPNOx ≥ α₁ ", that is, when it can be considered that the NOx concentration in the exhaust gas in the outlet of the upstream side NOx storage reduction catalyst 7a increases and the amount of NOx stored in the upstream side NOx storage reduction catalyst 7a increases, step 307 is performed, and a value of a rich spike flag RS is set to "1". When the value of the rich spike flag RS is set to "1", the amount of fuel to be injected from each of the fuel injection valves 111 to 114 of the cylinders is increased by the fuel injection operation performed by the ECU 30 separately, and the engine 1 is operated at a predetermined rich air-fuel ratio.

On the other hand, when it is determined in step S307 that the output UPNOx is lower than the determination value α₁ (UPNOx < α₁), it can be considered that the amount of NOx stored in the upstream side NOx storage reduction catalyst 7a is still small and the NOx storage ability is still sufficient. Accordingly, the present operation ends without performing the rich spike operation.

In step 309, it is determined whether an air-fuel ratio of the exhaust gas, which is detected by the upstream side air-fuel ratio sensor 31 provided in the outlet of the upstream side NOx storage reduction catalyst 7a, becomes a predetermined rich air-fuel ratio β₁ or a rich air-fuel ratio lower than the rich air-fuel ratio β₁.

As described above, while NOx is released from the NOx storage reduction catalyst, the air-fuel ratio in the outlet of the catalyst is maintained at an air-fuel ratio near the stoichiometric air-fuel ratio. When NOx is completely released from the NOx storage reduction catalyst and reduced, the air-fuel ratio of the exhaust gas in the outlet of the catalyst decreases to a rich air-fuel ratio substantially equal to the air-fuel ratio of the exhaust gas in the inlet of the NOx storage reduction catalyst. In the embodiment, until it is determined in step 309 that the air-fuel ratio UPAF becomes equal to or lower than the rich air-fuel ratio β₁ (UPAF ≤ β₁), steps 307 and 309 are repeatedly performed, and the value of the rich spike flag RS is maintained at "1" (rich spike operation is performed). The rich air-fuel ratio β₁ is an air-fuel ratio at which it can be determined that release of the NOx from the NOx storage reduction catalyst and reduction of the NOx are completed, and is obtained by experiment using the actual NOx storage reduction catalyst.

When it is determined in step S309 that the air-fuel ratio UPAF is equal to or lower than the rich air-fuel ratio β₁ (UPAF ≤ β₁), it can be considered that release of the NOx from the upstream side NOx storage reduction catalyst 7a and reduction of the NOx are completed. Therefore, step 311 is performed, and the value of the rich spike flag RS is reset to "0", afterwhich the rich spoke operation ends.

Thus, when the engine is operated in the low or medium load region, each time the amount of NOx stored in the upstream side NOx storage reduction catalyst 7a increases and reaches the predetermined value, the rich spike operation is performed, and efficient storage and reduction of NOx are performed using mainly the upstream side NOx storage reduction catalyst 7a.

Next, the case where it is determined in step 303 that the load LD is higher than the predetermined value LDH (LD > LDH) will be described.

In this case, since the engine is operated in the high load region, the amount of NOx generation is large. Therefore, the entire amount of NOx may not be processed by NOx reduction mainly using the upstream side NOx storage reduction catalyst 7a. Therefore, in this case, step 313 is performed, and each time a NOx concentration DWNOx, which is detected by the downstream side NOx sensor 29b provided in the outlet of the downstream side NOx storage reduction catalyst 7b, reaches a predetermined value α₂, the rich spike operation is started (steps 313 and 315). When the air-fuel ratio DWAF detected by the downstream side air-fuel ratio sensor 31b decreases to a predetermined rich air-fuel ratio β₂, the rich spike operation ends (steps 313, 137 and 319).

Thus, reduction of NOx is performed efficiently using the NOx storage abilities of both the upstream side NOx storage reduction catalyst 7a and the downstream side NOx storage reduction catalyst 7b. It is therefore possible to maintain high NOx reduction efficiency even when a large amount of NOx is contained in the exhaust gas.

### (2) Second embodiment

In the embodiment, when the engine is operated at high load, as in the case of the first embodiment, the start time of the rich spike operation is decided using the downstream side NOx sensor 29b, and the end time of the rich spike operation is determined using the downstream side air-fuel ratio sensor 31a.

However, in the embodiment, when the engine is operated in the low or medium load region, unlike the first embodiment, the rich spike operation is not started uniformly based on the output from the upstream side NOx sensor 29a, but the start time of the rich spike operation is decided based on the output from the NOx sensor selected according to the result of the comparison of the output from the upstream side NOx sensor 29 and the output from the downstream side NOx sensor 29b.

For example, when storage and reduction of NOx are repeatedly performed using the upstream side NOx storage reduction catalyst 7a while the engine is operated in the low or medium load region, as in the case of the first embodiment, the unreduced NOx, which is released from the upstream side NOx storage reduction catalyst 7a in the early stages of the rich spike operation, and the unreduced NOx which passes through the upstream side NOx storage reduction catalyst with an increase in the amount of the stored NOx while the engine is operated at a lean air-fuel ratio are stored in the downstream side NOx storage reduction catalyst 7b.

In this case, when the rich spike operation is performed based on the outputs from the upstream side NOx sensor 29a and the upstream side air-fuel ratio sensor 31 a, release and reduction of the NOx stored in the upstream side NOx storage reduction catalyst 7a can be completely performed. However, there is a possibility that release and reduction of the NOx stored in the downstream side NOx storage reduction catalyst becomes insufficient, and the amount of NOx stored in the downstream side NOx storage reduction catalyst increases.

Therefore, in the embodiment, when the engine is operated at low or medium load, the output from the upstream side NOx sensor 29 is compared with the output from the downstream side NOx sensor 29b. For example, in the case where NOx is hardly detected by the downstream side NOx sensor 29b, as in the case of the first embodiment, the rich spike operation is started when the NOx concentration detected by the upstream side NOx sensor 29b reaches the predetermined value.

When NOx in the exhaust gas is detected by the downstream side NOx sensor 29b, the output from the upstream side NOx sensor 29a is compared with the output from the downstream side NOx sensor 29b. When the NOx concentration in the exhaust gas detected by the downstream side NOx sensor 29b is higher than the NOx concentration in the exhaust gas detected by the upstream side NOx sensor 29a, the rich spike operation is started when the NOx concentration detected by the downstream side NOx sensor 29b reaches the predetermined value.

Namely, in this case, the NOx concentration in the exhaust gas in the outlet of the downstream side NOx storage reduction catalyst 7b (output from the downstream side NOx sensor 29b) is higher than the NOx concentration in the exhaust gas in the inlet of the downstream side NOx storage reduction catalyst 7b (output from the upstream side NOx sensor 29a). Therefore, it can be considered that storage of NOx is hardly performed in the downstream side NOx storage reduction catalyst 7b since the amount of NOx stored in the downstream side NOx storage reduction catalyst 7b considerably increases. Therefore, in the embodiment, in this case, the rich spike operation is performed based on the NOx concentration in the exhaust gas detected by the downstream side NOx sensor 29b. Thus, appropriate release and reduction of the stored NOx can be performed according to the NOx storage state of the downstream side NOx storage reduction catalyst 7b.

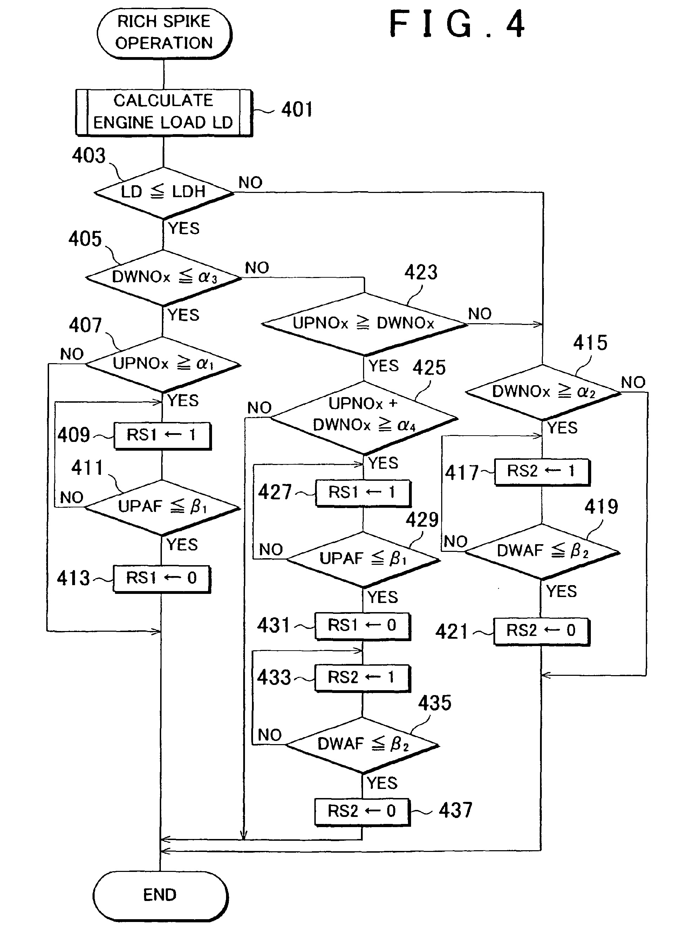

FIG. 4 is a flowchart for describing the rich spike operation in the embodiment in detail. The rich spike operation is performed by the ECU 30.

In the rich spike operation in FIG. 4, the engine load LD is initially calculated in step 401. In step 403, it is determined whether the engine load LD is equal to or lower than the predetermined value LDH, that is, whether the engine is presently operated at low or medium load. Steps 401 and 403 are the same as steps 301 and 303, respectively.

When it is determined in step 403 that the engine load LD is higher than the predetermined value LDH (LD > LDH), that is, when the engine is presently operated at high load, steps 415 to 421 are performed, and the rich spike operation is performed based on the outputs from the downstream side NOx sensor 29b and the downstream side air-fuel ratio sensor 31b.

Steps 415 to 321 are the same as steps 313 to 319 in FIG. 3, respectively. However, in the embodiment, in the rich spike operation while the engine is operated at high load, that is, in the rich spike operation based on the NOx storage state of the downstream side NOx storage reduction catalyst 7b, a flag RS2 is used as a rich spike flag, which is different from the embodiment in FIG. 3.

As will be described later, in the embodiment, there is a difference in an air-fuel ratio in the engine during the rich spike operation between the rich spike operation performed based on the NOx storage state of the upstream side NOx storage reduction catalyst and the rich spike operation performed based on the NOx storage state of the downstream side NOx storage reduction catalyst. During the rich spike operation based on the NOx storage state of the downstream side NOx storage reduction catalyst, the rich spike flag RS2 is used. During the rich spike operation based on the NOx storage state of the upstream side NOx storage reduction catalyst, the rich spike flag RS 1 is used. When the flag RS2 is set to "1", the air-fuel ratio in the engine during the rich spike operation is set to be lower than that when the flag RS1 is set to "1". The reasons why there is a difference in the air-fuel ratio of the exhaust gas during the rich spike operation will be described later in detail.

On the other hand, when it is determined in step 403 that the engine load LD is equal to or lower than the predetermined value LDH (LD ≤ LDH), that is, when the engine is operated at low or medium load, it is then determined in step 405 whether the NOx concentration DWNOx in the exhaust gas in the outlet of the downstream side NOx storage reduction catalyst 7b, which is detected by the downstream side NOx sensor 29b, is equal to or lower than a predetermined value α₃, that is, whether the NOx concentration DWNOx becomes substantially "0". The predetermined value α₃ in step 403 is a small value near "0".

In the embodiment, when it is determined in step 405 that the NOx concentration DWNOx is equal to or lower than the predetermined value α₃ (DWNOx ≤ α₃), that is, when the NOx concentration in the exhaust gas in the outlet of the downstream side NOx storage reduction catalyst 7b is substantially "0", steps 407 to 413 are performed, and start and end of the rich spike operation are controlled based on the NOx concentration UPNOx detected by the upstream side NOx sensor 29a and the air-fuel ratio detected by the upstream side air-fuel ratio sensor 31a.

Namely, in this case, the rich spike operation based on the NOx storage state of the upstream side NOx storage reduction catalyst 7a is performed. Steps 407 to 413 are the same as steps 305 to 311 in FIG 3, respectively. However, the fact that the flag RS1 is used as the rich spike flag is different from the rich spike operation in FIG 3.

Next, the case where the NOx concentration DWNOx is higher than the predetermined value α₃, that is, where NOx is detected in the exhaust gas in the outlet of the downstream side NOx storage reduction catalyst 7b, will be described.

In this case, step 423 is then performed, and the NOx concentration UPNOx in the exhaust gas, which is detected by the upstream side NOx sensor 29a, is compared with the NOx concentration DWNOx in the exhaust gas, which is detected by the downstream side NOx sensor 29b.

When is determined in step 423 that the NOx concentration UPNOx is lower than the NOx concentration DWNOx (UPNOx < DWNOx), that is, when the NOx concentration in the exhaust gas in the outlet of the downstream side NOx storage reduction catalyst 7b is higher than the NOx concentration in the exhaust gas in the outlet of the upstream side NOx storage reduction catalyst 7a, as described above, it can be considered that the amount of NOx stored in the downstream side NOx storage reduction catalyst 7b has been increased considerably. Therefore, in this case, step 415 is performed, and the rich spike operation based on the NOx storage state of the downstream side NOx storage reduction catalyst 7b is performed.

On the other hand, when it is determined in step 423 that the NOx concentration UPNOx is equal to or higher than the NOx concentration DWNOx (UPNOx ≥ DWNOx), NOx is detected in the exhaust gas in the outlet of the downstream side NOx storage reduction catalyst. However, storage of NOx in the exhaust gas is still performed by the downstream side NOx storage reduction catalyst 7b. Therefore, it can be considered that the amount of NOx stored in the downstream side NOx storage reduction catalyst 7b has not been increased considerably.

Accordingly, in this case, whether the rich spike operation needs to be performed is decided in consideration of the NOx storage states of both the upstream side NOx storage reduction catalyst 7a and the downstream side NOx storage reduction catalyst 7b, and step 425 is performed.

In step 425, it is determined whether the value obtained by adding the NOx concentration in the exhaust gas detected by the upstream side NOx sensor 29a to the NOx concentration in the exhaust gas detected by the downstream side NOx sensor 29b has increased to a predetermined value α₄. When it is determined that the total NOx concentration is lower than the predetermined value α₄ (UPNOx + DWNOx < α₄), the operation ends, and steps 427 to 437 are not performed.

On the other hand, when it is determined in step 423 that the total NOx concentration is equal to or higher than α₄ (UPNOx + DWNOx ≥ α₄), the amounts of NOx stored in both NOx storage reduction catalysts increase. However, it can be considered that the amount of NOx stored in the downstream side NOx storage reduction catalyst 7b has not increased to a level at which the rich spike operation in steps 415 to 421 needs to be performed immediately.

Therefore, in this case, release and reduction of NOx in the upstream side NOx storage reduction catalyst 7a, and release and reduction of NOx in the downstream side NOx storage reduction catalyst 7b are performed individually. Namely, in this case, first, the rich spike operation based on the NOx storage state of the upstream side NOx storage reduction catalyst 7a is performed in steps 427 to 437. After the completion of this rich spike operation (after the air-fuel ratio UPAF becomes equal to or lower than the air-fuel ratio β₁ in step 429), the air-fuel ratio is further decreased (made richer) (the flag RS2 is set to "1" in step 433), the rich spike operation based on the NOx storage state of the downstream side NOx storage reduction catalyst 7b is performed in steps 431 to 437.

Thus, the rich spike operation based on the NOx storage state of each NOx storage reduction catalyst is performed.

Next, the reasons why a difference is made in the air fuel ratio during the rich spike operation by using the two rich spike flags RS1 and RS2 in the embodiment will be described.

Namely, in the embodiment, the O₂ storage ability of the downstream side NOx storage reduction catalyst is made higher than that of the upstream side NOx storage reduction catalyst 7a. Also, as described above, even if the rich spike operation is started, while oxygen is released from the NOx storage reduction catalyst due to O₂ storage action, HC and CO components and the like in the exhaust gas react with oxygen and are consumed, and are not used for reduction of NOx. Accordingly, while oxygen is released due to O₂ storage action, there is a possibility that NOx released from the NOx storage reduction catalyst is released to the downstream side without being reduced.

Therefore, it is preferable that the oxygen released due to O₂ storage action be made to react in a short time as soon as possible during the rich spike operation of the NOx storage reduction catalyst, and reduction of NOx be started early. However, when the O₂ storage ability is high, the amount of the oxygen to be released is also large. Therefore, if the rich spike operation is performed at the same air-fuel ratio as that in the case the O₂ storage ability is low, the time required for consuming oxygen is long compared with the case where the O₂ storage ability is low, and start of the reduction of NOx may be delayed. Accordingly, in the embodiment, when the rich spike operation based on the NOx storage state of the downstream side NOx storage reduction catalyst 7b is performed, the air-fuel ratio of the exhaust gas is set to be low compared with the case where the rich spike operation is performed based on the NOx storage state of the upstream side NOx storage reduction catalyst 7a.

It is thus possible to start actual reduction of NOx in a short time after the rich spike operation is started, regardless of the O₂ storage ability. it is also possible to minimize the amount of the unreduced NOx released at the start time of the rich spike operation.

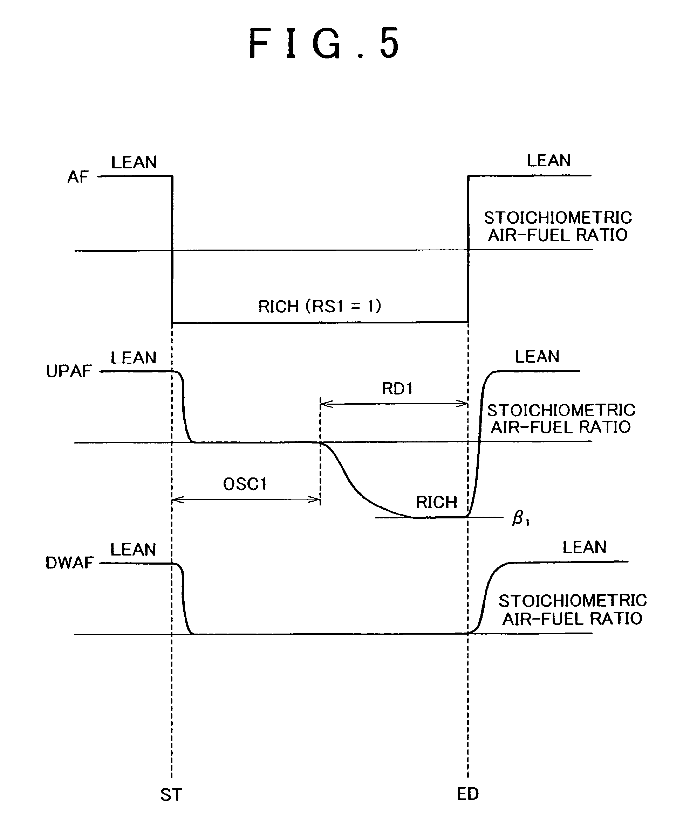

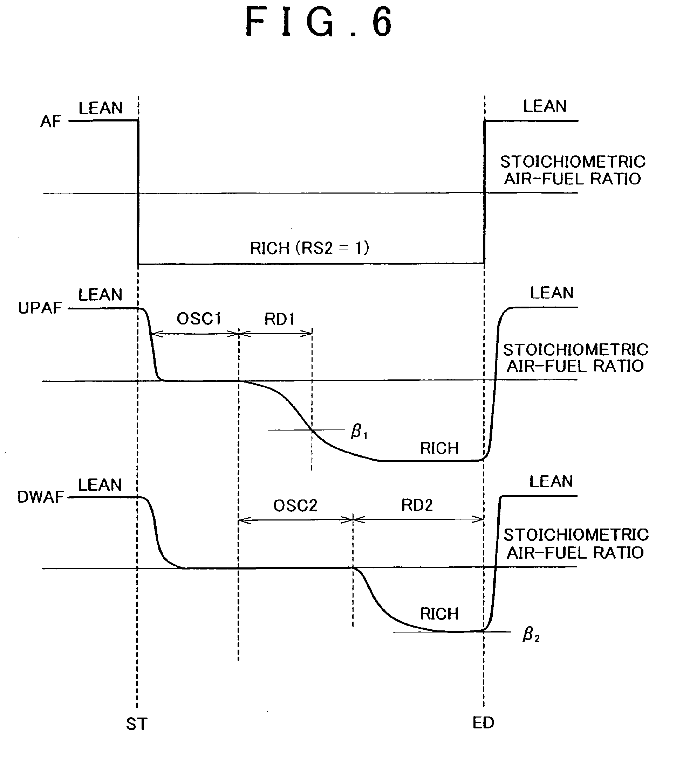

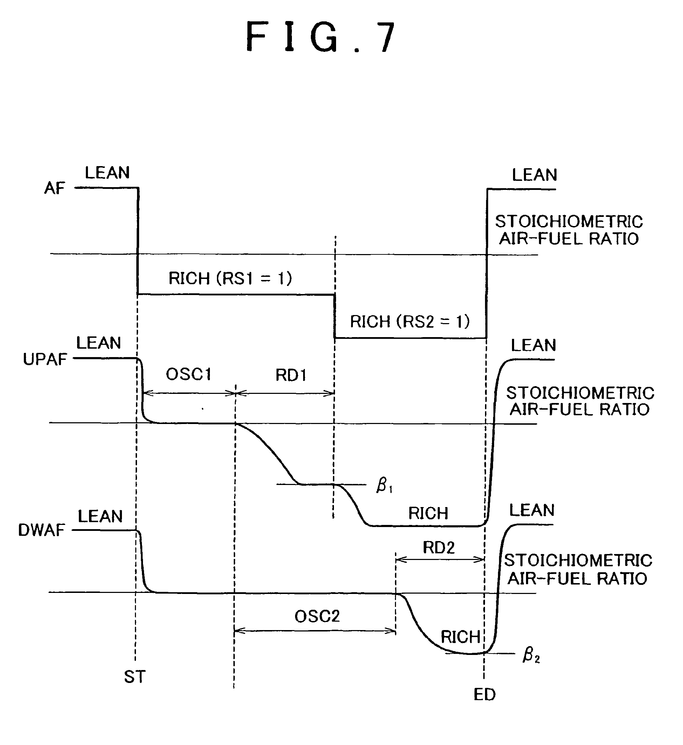

FIG. 5 to FIG. 7 are timing charts showing a change in an air-fuel ratio AF of the exhaust gas in the engine, a change in the air-fuel ratio UPAF of the exhaust gas in the outlet of the upstream side NOx storage reduction catalyst 7a, which is detected by the upstream side air-fuel ratio sensor 31a, and a change in an air-fuel ratio DWAF of the exhaust gas in the outlet of the downstream side NOx storage reduction catalyst 7b, which is detected by the downstream side air-fuel ratio sensor 31b, during the rich spike operation in FIG. 4. FIG. 5 shows the case of the rich spike operation based on the NOx storage state of the upstream side NOx storage reduction catalyst 7a (the rich spike operation using the flag RS1) (steps 409 to 413 in FIG. 4). FIG. 6 shows the case of the rich spike operation based on the NOx storage state of the downstream side NOx storage reduction catalyst 7b (the rich spike operation using the flag RS2) (steps 417 to 421 in FIG. 4). FIG 7 shows the case where the both rich spike operations are successively performed (steps 427 to 437 in FIG. 4).

Description will be made by taking FIG. 5 as an example. When the rich spike operation is started while the engine is being operated, and the engine operation air-fuel ratio AF is changed to a rich air-fuel ratio corresponding to flag RS1 = "1" (at time ST in FIG. 5), the output UPAF from the upstream side air-fuel ratio sensor is maintained at the stoichiometric air-fuel ratio for a certain period (period OSC 1 in FIG. 5), and then becomes a rich air-fuel ratio. When the output UPAD decreases to the predetermined rich air-fuel ratio (β₁), the rich spike operation ends, and the engine air-fuel ratio is returned to a lean air-fuel ratio (at time ED in FIG. 5). In this case, the output DWAF from the downstream side air-fuel ratio sensor is maintained at the stoichiometric air-fuel ratio during the rich spike operation period (the period from time ST to time ED in FIG. 5).

In FIG. 5, the period OSC 1 corresponds to the period in which the oxygen released due to the O₂ storage ability reacts with HC, CO and the like in the exhaust gas, and the period after the period OSC ends until the rich spike operation ends (period RD 1 in FIG. 5) corresponds to the period in which reduction of NOx released from the upstream side NOx storage reduction catalyst 7a is performed.

FIG. 6 shows the case of the rich spike operation intended for reduction of the NOx stored in the downstream side NOx storage reduction catalyst 7b. In this case, the engine operation air-fuel ratio AF is changed to an air-fuel ratio which is lower than the air-fuel ratio in FIG. 5 (richer) and which corresponds to RS2 = "1" during the rich spike operation.

Also, in this case, after reduction of the NOx stored in the upstream side NOx storage reduction catalyst 7a (period RD 1 in FIG. 6) ends, consumption of the released oxygen released (period OSC2 in FIG. 6), and reduction of the stored NOx (period RD2 in FIG. 6) occur in the downstream side NOx storage reduction catalyst 7b. When the air-fuel ratio DWAF of the exhaust gas in the outlet of the downstream side NOx storage reduction catalyst 7b decreases to the predetermined rich air-fuel ratio (β₂), the rich spike operation ends.

FIG. 7 shows the case where the rich spike operation based on the NOx storage state of the upstream side NOx storage reduction catalyst 7a us initially performed, and then the rich spike operation based on the NOx storage state of the downstream side NOx storage reduction catalyst 7b is performed. The reference characters in FIG. 7 are the same as those in FIGS. 5 and 6. In this case, after reduction of the NOx stored in the upstream side NOx storage reduction catalyst 7a ends, the air-fuel ratio of the exhaust gas is changed to the air-fuel ratio corresponding to the flag RS1 = "1" to the lower (richer) air-fuel ratio corresponding to the flag RS2 = "1".

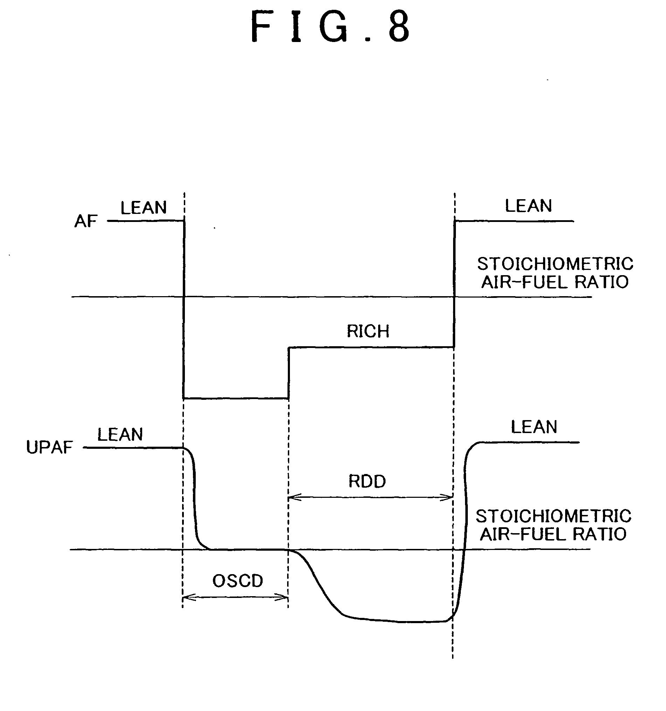

As described above, it is preferable that the period required for consumption of the released oxygen during the rich spike operation be as short as possible. Therefore, as shown in FIG 8, the amount of unreduced NOx released in the early stages of the rich spike operation can be reduced, for example, by setting the air-fuel ratio of the exhaust gas immediately after the start of the rich spike operation to a low value, and consuming the released oxygen in a short time (period OSCD in FIG. 8). and then increasing the air-fuel ratio of the exhaust gas to a rich air-fuel ratio that is the lower limit required for reduction of NOx when the air-fuel ratio of the exhaust gas in the outlet of the NOx storage reduction catalyst is changed to a rich air-fuel ratio, and performing reduction of NOx (period RDD in FIG. 8).

In an exhaust passage (2) of an engine (1), there are provided an upstream side NOx storage reduction catalyst (7a); a downstream side NOx storage reduction catalyst (7b); an upstream side NOx sensor (29a) and a downstream side NOx sensor (29b) each of which detects a NOx concentration in exhaust gas in an outlet of the catalyst; and an upstream side air-fuel ratio sensor (31a) and a downstream side air-fuel ratio sensor (31b) each of which detects an air-fuel ratio of the exhaust gas in the outlet of the catalyst. An electronic control unit (ECU) 30 starts a rich spike operation when an output from the NOx sensor reaches a predetermined value, and ends the rich spike operation when an output from the air-fuel ratio becomes a predetermined rich air-fuel ratio. The ECU (30) decides start time and end time of the rich spike operation using the upstream side NOx sensor (29a) and the upstream side air-fuel ratio sensor, when the engine is being operated at high load. The ECU decides the start time and the end time of the rich spike operation using the downstream side NOx sensor (29b) and the downstream side air-fuel ratio sensor, when the engine is being operated at low or medium load.

## Claims

1. An exhaust gas control apparatus for an internal combustion engine, including a NOx storage reduction catalyst which stores NOx in exhaust gas by adsorbing and/or absorbing the NOx when an air-fuel ratio of the exhaust gas flowing in the NOx storage reduction catalyst (7) is lean, and which reduces the stored NOx using reducing components in the exhaust gas when the air-fuel ratio of the exhaust gas flowing in the NOx storage reduction catalyst is rich, **characterized by** comprising:
an upstream side NOx storage reduction catalyst (7a) which is provided in an exhaust passage of an internal combustion engine;
a downstream side NOx storage reduction catalyst (7b) which is provided in the exhaust passage at a position downstream from the upstream side NOx storage reduction catalyst (7a);
an upstream side NOx sensor (29a) which is provided in the exhaust passage at a position between the upstream side NOx storage reduction catalyst (7a) and the downstream side NOx storage reduction catalyst (7b) and which detects a NOx concentration in the exhaust gas; and
a downstream side NOx sensor (29b) which is provided in the exhaust passage at a position downstream from the downstream side NOx storage reduction catalyst (7b) and which detects the NOx concentration in the exhaust gas.

2. The exhaust gas control apparatus according to claim 1, **characterized in that** when a rich spike operation for reducing the NOx stored in the NOx storage reduction catalyst is performed by temporarily changing the air-fuel ratio of the exhaust gas flowing in the upstream side NOx storage reduction catalyst (7a) from a lean air-fuel ratio to a rich air-fuel ratio, one of the upstream side NOx sensor (29a) and the downstream side NOx sensor (29b) is selected, and start time of the rich spike operation is decided based on a NOx concentration in the exhaust gas detected by the selected NOx sensor (29a, 29b).

3. The exhaust gas control apparatus according to claim 2, **characterized in that** one of the upstream side NOx sensor (29a) and the downstream side NOx sensor (29b) is selected according to an engine load.

4. The exhaust gas control apparatus according to claim 3, **characterized in that**, in a case where the rich spike operation is performed, when the engine load is in one of a low load region and a medium load region, the upstream side NOx sensor (29a) is selected, and when the engine load is in a high load region, the downstream side NOx sensor (29b) is selected.

5. The exhaust gas control apparatus according to claim 2, **characterized in that** one of the upstream side NOx sensor (29a) and the downstream side NOx sensor (29b) is selected based on NOx concentrations detected by the upstream side NOx sensor (29a) and the downstream side NOx sensor (29b).

6. The exhaust gas control apparatus according to claim 5, **characterized in that**, when the engine is being operated in a low load region or a medium load region, the NOx concentration in the exhaust gas, which is detected by the upstream side NOx sensor (29a), is compared with the NOx concentration in the exhaust gas, which is detected by the downstream side NOx sensor (29b), the NOx sensor which has detected the higher NOx concentration is selected, and the start time of the rich spike operation is decided based on the NOx concentration in the exhaust gas detected by the selected NOx sensor (29a, 29b); and when the engine is being operated in a high load region, the start time of the rich spike operation is decided based on the NOx concentration in the exhaust gas detected by the downstream side NOx sensor (29b).

7. The exhaust gas control apparatus according to any one of claims 1 to 6, **characterized by** further comprising:
an upstream side air-fuel ratio sensor (31a) which is provided in the exhaust passage at a position between the upstream side NOx storage reduction catalyst (7a) and the downstream side NOx storage reduction catalyst (7b) and which detects an air-fuel ratio of the exhaust gas; and
a downstream side air-fuel ratio sensor (31b) which is provided in the exhaust passage at a position downstream from the downstream side NOx storage reduction catalyst (7b) and which detects an air-fuel ratio of the exhaust gas, wherein
when the rich spike operation is started based on the NOx concentration detected by the upstream side NOx sensor (29a), end time of the rich spike operation is decided based on the air-fuel ratio of the exhaust gas detected by the upstream side air-fuel ratio sensor (31a), and wherein
when the rich spike operation is started based on the NOx concentration detected by the downstream side NOx sensor (29b), the end time of the rich spike operation is decided based on the air-fuel ratio of the exhaust gas detected by the downstream side air-fuel ratio sensor (31b).

8. The exhaust gas control apparatus according to any one of claim 1 to claim 7, **characterized in that**:
each of the upstream side NOx storage reduction catalyst (7a) and the downstream side NOx storage reduction catalyst (7b) has an oxygen storage ability of absorbing oxygen in the exhaust gas when the air-fuel ratio of the exhaust gas is lean and releasing the absorbed oxygen when the air-fuel ratio of the exhaust gas is rich;
the oxygen storage ability of the downstream side NOx storage reduction catalyst (7b) is made higher than the oxygen storage ability of the upstream side NOx storage reduction catalyst (7a);
when the rich spike operation is started based on the NOx concentration detected by the downstream side NOx sensor (29b), the NOx stored in the upstream side NOx storage reduction catalyst (7a) is initially reduced, and then the NOx stored in the downstream side NOx storage reduction catalyst (7b) is reduced; and
when the NOx stored in the downstream side NOx storage reduction catalyst (7b) is reduced the air-fuel ratio of the exhaust gas flowing in the upstream side NOx storage reduction catalyst (7a) during the rich spike operation is set to be low as compared to when the NOx stored in the upstream side NOx storage reduction catalyst (7a) is reduced.

9. The exhaust gas control apparatus according to any one of claim 1 to claim 7, **characterized in that**:
each of the upstream side NOx storage reduction catalyst (7a) and the downstream side NOx storage reduction catalyst (7b) has an oxygen storage ability of absorbing oxygen in the exhaust gas when the air-fuel ratio of the exhaust gas is lean and releasing the absorbed oxygen when the air-fuel ratio of the exhaust gas is rich; and
the oxygen storage ability of the downstream side NOx storage reduction catalyst (7b) is made higher than the oxygen storage ability of the upstream side NOx storage reduction catalyst (7a), and a NOx storage ability of the upstream side NOx storage reduction catalyst (7a) is made higher than a NOx storage ability of the downstream side NOx storage reduction catalyst (7b).

10. An exhaust gas control method for an internal combustion engine, including i) a NOx storage reduction catalyst (7) which includes an upstream side NOx storage reduction catalyst (7a) that is provided in an exhaust passage of the internal combustion engine and a downstream side NOx storage reduction catalyst (7b) that is provided in the exhaust passage at a position downstream from the upstream side NOx storage reduction catalyst (7a), and which stores NOx in exhaust gas by adsorbing and/or absorbing the NOx when an air-fuel ratio of the exhaust gas flowing in the NOx storage reduction catalyst (7) is lean, and which reduces the stored NOx using reducing components in the exhaust gas when the air-fuel ratio of the exhaust gas flowing in the NOx storage reduction catalyst is rich, ii) an upstream side NOx sensor (29a) which is provided in the exhaust passage at a position between the upstream side NOx storage reduction catalyst (7a) and the downstream side NOx storage reduction catalyst (7b) and which detects a NOx concentration in the exhaust gas, and iii) a downstream side NOx sensor (29b) which is provided in the exhaust passage at a position downstream from the downstream side NOx storage reduction catalyst (7b) and which detects the NOx concentration in the exhaust gas **characterized by** comprising the steps of:
selecting one of the upstream side NOx sensor (29a) and the downstream side NOx sensor (29b) when a rich spike operation for reducing the NOx stored in the NOx storage reduction catalyst (7) is performed by temporarily changing the air-fuel ratio of the exhaust gas flowing in the upstream side NOx storage reduction catalyst (7a) from a lean air-fuel ratio to a rich air-fuel ratio; and
deciding start time of the rich spike operation based on a NOx concentration in the exhaust gas detected by the selected NOx sensor (29a, 29b).

11. The exhaust gas control method according to claim 10, **characterized in that** one of the upstream side NOx sensor (29a) and the downstream side NOx sensor (29b) is selected according to the engine load.

12. The exhaust gas control method according to claim 10, **characterized in that** one of the upstream side NOx sensor (29a) and the downstream side NOx sensor (29b) is selected based on the NOx concentrations detected by the upstream side NOx sensor (29a) and the downstream side NOx sensor (29b).

## Patentansprüche

1. Abgassteuergerät für eine Brennkraftmaschine, die einen NOx-Speicherungs-Reduktions-Katalysator aufweist, der NOx in einem Abgas durch Adsorbieren und/oder Absorbieren des NOx speichert, wenn ein Luft-Kraftstoff-Verhältnis des in dem NOx-Speicherungs-Reduktions-Katalysator (7) strömenden Abgases mager ist, und der das gespeicherte NOx unter Verwendung von Reduktionskomponenten in dem Abgas reduziert, wenn das Luft-Kraftstoff-Verhältnis des in dem NOx-Speicherungs-Reduktions-Katalysator strömenden Abgases fett ist, **dadurch gekennzeichnet, dass** es Folgendes aufweist:
einen stromaufwärtigen NOx-Speicherungs-Reduktions-Katalysator (7a), der in einem Auslassdurchlass einer Brennkraftmaschine vorgesehen ist;
einen stromabwärtigen NOx-Speicherungs-Reduktions-Katalysator (7b), der in dem Auslassdurchlass an einer von dem stromaufwärtigen NOx-Speicherungs-Reduktions-Katalysator (7a) stromabwärtigen Stelle vorgesehen ist;
einen stromaufwärtigen NOx-Sensor (29a), der in dem Auslassdurchlass an einer Stelle zwischen dem stromaufwärtigen NOx-Speicherungs-Reduktions-Katalysator (7a) und dem stromabwärtigen NOx-Speicherungs-Reduktions-Katalysator (7b) vorgesehen ist und der eine NOx-Konzentration in dem Abgas erfasst; und
einen stromabwärtigen NOx-Sensor (29b), der in dem Auslassdurchlass an einer Stelle stromabwärts des stromabwärtigen NOx-Speicherungs-Reduktions-Katalysators (7b) vorgesehen ist und der die NOx-Konzentration in dem Abgas erfasst.

2. Abgassteuergerät gemäß Anspruch 1, **dadurch gekennzeichnet, dass** dann, wenn ein Rich-Spike-Betrieb zur Reduzierung des in dem NOx-Speicherungs-Reduktions-Katalysator gespeicherten NOx durch zeitweiliges Ändern des Luft-Kraftstoff-Verhältnisses des in dem stromaufwärtigen NOx-Speicherungs-Reduktions-Katalysator (7a) strömenden Abgases von einem mageren Luft-Kraftstoff-Verhältnis zu einem fetten Luft-Kraftstoff-Verhältnis durchgeführt wird, einer von dem stromaufwärtigen NOx-Sensor (29a) und dem stromabwärtigen NOx-Sensor (29b) ausgewählt wird und die Startzeit des Rich-Spike-Betriebs auf Grundlage einer durch den ausgewählten NOx-Sensor (29a, 29b) erfassten NOx-Konzentration in dem Abgas bestimmt wird.

3. Abgassteuergerät gemäß Anspruch 2, **dadurch gekennzeichnet, dass** einer von dem stromaufwärtigen NOx-Sensor (29a) und dem stromabwärtigen NOx-Sensor (29b) gemäß einer Kraftmaschinenlast ausgewählt wird.

4. Abgassteuergerät gemäß Anspruch 3, **dadurch gekennzeichnet, dass** in einem Fall, in dem der Rich-Spike-Betrieb durchgeführt wird, der stromaufwärtige NOx-Sensor (29a) ausgewählt wird, wenn sich die Kraftmaschinenlast in einem von einem niedrigen Lastbereich und einem mittleren Lastbereich befindet, und der stromabwärtige NOx-Sensor (29b) ausgewählt wird, wenn sich die Kraftmaschinenlast in einem hohen Lastbereich befindet.

5. Abgassteuergerät gemäß Anspruch 2, **dadurch gekennzeichnet, dass** einer von dem stromaufwärtigen NOx-Sensor (29a) und dem stromabwärtigen NOx-Sensor (29b) auf Grundlage von durch den stromaufwärtigen NOx-Sensor (29a) und den stromabwärtigen NOx-Sensor (29b) erfassten NOx-Konzentrationen ausgewählt wird.

6. Abgassteuergerät gemäß Anspruch 5, **dadurch gekennzeichnet, dass** dann, wenn die Kraftmaschine in einem niedrigen Lastbereich oder einem mittleren Lastbereich betrieben wird, die NOx-Konzentration in dem Abgas, die durch den stromaufwärtigen NOx-Sensor (29a) erfasst wird, mit der NOx-Konzentration in dem Abgas verglichen wird, die durch den stromabwärtigen NOx-Sensor (29b) erfasst wird, der NOx-Sensor ausgewählt wird, der die höhere NOx-Konzentration erfasst hat, und die Startzeit des Rich-Spike-Betriebs auf Grundlage der NOx-Konzentration in dem Abgas bestimmt wird, die durch den ausgewählten NOx-Sensor (29a, 29b) erfasst wurde; und dass dann, wenn die Kraftmaschine in einem hohen Lastbereich betrieben wird, die Startzeit des Rich-Spike-Betriebs auf Grundlage der NOx-Konzentration in dem Abgas entschieden wird, die durch den stromabwärtigen NOx-Sensor (29b) erfasst wurde.

7. Abgassteuergerät gemäß einem der Ansprüche 1 bis 6, **dadurch gekennzeichnet, dass** es ferner aufweist:
einen stromaufwärtigen Luft-Kraftstoff-Verhältnis-Sensor (31a), der in dem Auslassdurchlass an einer Stelle zwischen dem stromaufwärtigen NOx-Speicherungs-Reduktions-Katalysator (7a) und dem stromabwärtigen NOx-Speicherungs-Reduktions-Katalysator (7b) vorgesehen ist und der ein Luft-Kraftstoff-Verhältnis des Abgases erfasst; und
einen stromabwärtigen Luft-Kraftstoff-VerhältnisSensor (31b), der in dem Auslassdurchlass an einer Stelle stromabwärts des stromabwärtigen NOx-Speicherungs-Reduktions-Katalysators (7b) vorgesehen ist, und der ein Luft-Kraftstoff-Verhältnis des Abgases erfasst, wobei
die Endzeit des Rich-Spike-Betriebs auf Grundlage des durch den stromaufwärtigen Luft-Kraftstoff-VerhältnisSensor (31a) erfassten Luft-Kraftstoff-Verhältnisses des Abgases bestimmt wird, wenn der Rich-Spike-Betrieb auf Grundlage der durch den stromabwärtigen NOx-Sensor (29a) erfassten NOx-Konzentration gestartet wird, und wobei
die Endzeit des Rich-Spike-Betriebs auf Grundlage des durch den stromabwärtigen Luft-Kraftstoff-VerhältnisSensor (31b) erfassten Luft-Kraftstoff-Verhältnisses des Abgases bestimmt wird, wenn der Rich-Spike-Betrieb auf Grundlage der durch den stromabwärtigen NOx-Sensor (29b) erfassten NOx-Konzentration gestartet wird.

8. Abgassteuergerät gemäß einem der Ansprüche 1 bis 7, **dadurch gekennzeichnet, dass**
sowohl der stromaufwärtige NOx-Speicherungs-Reduktions-Katalysator (7a) als auch der stromabwärtige NOx-Speicherungs-Reduktions-Katalysator (7b) eine Sauerstoffspeicherfähigkeit hat, um Sauerstoff in dem Abgas zu absorbieren, wenn das Luft-Kraftstoff-Verhältnis des Abgases mager ist, und um den absorbierten Sauerstoff freizugeben, wenn das Luft-Kraftstoff-Verhältnis des Abgases fett ist;
wobei die Sauerstoffspeicherfähigkeit des stromabwärtigen NOx-Speicherungs-Reduktions-Katalysators (7b) höher als die Sauerstoffspeicherfähigkeit des stromaufwärtigen NOx-Speicherungs-Reduktions-Katalysators (7a) gemacht ist;
wobei dann, wenn der Rich-Spike-Betrieb auf Grundlage der durch den stromabwärtigen NOx-Sensor (29b) erfassten NOx-Konzentration gestartet wird, das in dem stromaufwärtigen NOx-Speicherungs-Reduktions-Katalysator (7a) gespeicherte NOx anfänglich reduziert wird, und dann das in dem stromabwärtigen NOx-Speicherungs-Reduktions-Katalysator (7b) gespeicherte NOx reduziert wird; und
wobei dann, wenn das in dem stromabwärtigen NOx-Speicherungs-Reduktions-Katalysator (7b) gespeicherte NOx reduziert wird, das Luft-Kraftstoff-Verhältnis des in dem stromaufwärtigen NOx-Speicherungs-Reduktions-Katalysator (7a) strömenden Abgases während dem Rich-Spike-Betrieb verglichen mit dann niedriger eingestellt ist, wenn das in dem stromaufwärtigen NOx-Speicherungs-Reduktions-Katalysator (7a) gespeicherte NOx reduziert wird.

9. Abgassteuergerät gemäß einem der Ansprüche 1 bis 7, **dadurch gekennzeichnet, dass**
sowohl der stromaufwärtige NOx-Speicherungs-Reduktions-Katalysator (7a) als auch der stromabwärtige NOx-Speicherungs-Reduktions-Katalysator (7b) eine Sauerstoffspeicherfähigkeit hat, um Sauerstoff in dem Abgas zu absorbieren, wenn das Luft-Kraftstoff-Verhältnis des Abgases mager ist und um den absorbierten Sauerstoffs freizugeben, wenn das Luft-Kraftstoff-Verhältnis des Abgases fett ist; und
wobei die Sauerstoffspeicherfähigkeit des stromabwärtigen NOx-Speicherungs-Reduktions-Katalysators (7b) höher als die Sauerstoffspeicherfähigkeit des stromaufwärtigen NOx-Speicherungs-Reduktions-Katalysators (7a) gemacht ist und eine NOx-Speicherfähigkeit des stromaufwärtigen NOx-Speicherungs-Reduktions-Katalysators (7a) höher als eine NOx-Speicherfähigkeit des stromabwärtigen NOx-Speicherungs-Reduktions-Katalysators (7b) gemacht ist.

10. Abgassteuerverfahren für eine Brennkraftmaschine, mit i) einem NOx-Speicherungs-Reduktions-Katalysator (7), der einen in einem Auslassdurchlass der Brennkraftmaschine vorgesehenen stromaufwärtigen NOx-Speicherungs-Reduktions-Katalysator (7a) und einen in dem Auslassdurchlass an einer Stelle stromabwärts des stromaufwärtigen NOx-Speicherungs-Reduktions-Katalysator (7a) vorgesehenen stromabwärtigen NOx-Speicherungs-Reduktions-Katalysator (7b) aufweist, und der NOx in einem Abgas durch Adsorbieren und/oder Absorbieren des NOx speichert, wenn ein Luft-Kraftstoff-Verhältnis des in dem NOx-Speicherungs-Reduktions-Katalysator (7) strömenden Abgases mager ist, und der das gespeicherte NOx unter Verwendung von Reduktionskomponenten in dem Abgas reduziert, wenn das Luft-Kraftstoff-Verhältnis des in dem NOx-Speicherungs-Reduktions-Katalysator strömenden Abgases fett ist, ii) einem stromaufwärtigen NOx-Sensor (29a), der in dem Auslassdurchlass an einer Stelle zwischen dem stromaufwärtigen NOx-Speicherungs-Reduktions-Katalysator (7a) und dem stromabwärtigen NOx-Speicherungs-Reduktions-Katalysator (7b) vorgesehen ist, und der eine NOx-Konzentration in dem Abgas erfasst, und iii) einem stromabwärtigen NOx-Sensor (29b), der in dem Auslassdurchlass an einer Stelle stromabwärts des stromabwärtigen NOx-Speicherungs-Reduktions-Katalysators (7b) vorgesehen ist und der die NOx-Konzentration in dem Abgas erfasst, **dadurch gekennzeichnet, dass** es folgende Schritte aufweist:
Auswählen von einem von dem stromaufwärtigen NOx-Sensor (29a) und dem stromabwärtigen NOx-Sensor (29b), wenn ein Rich-Spike-Betrieb zum Reduzieren des in dem NOx-Speicherungs-Reduktions-Katalysator (7) gespeicherten NOx durchgeführt wird, indem das Luft-Kraftstoff-Verhältnis des in dem stromaufwärtigen NOx-Speicherungs-Reduktions-Katalysator (7a) strömenden Abgases temporär von einem mageren Luft-Kraftstoff-Verhältnis auf ein fettes Luft-Kraftstoff-Verhältnis geändert wird; und
Bestimmen der Startzeit des Rich-Spike-Betriebs auf Grundlage einer durch den ausgewählten NOx-Sensor (29a, 29b) erfassten NOx-Konzentration in dem Abgas.

11. Abgassteuerverfahren gemäß Anspruch 10, **dadurch gekennzeichnet, dass** einer von dem stromaufwärtigen NOx-Sensor (29a) und dem stromabwärtigen NOx-Sensor (29b) gemäß der Kraftmaschinenlast ausgewählt wird.

12. Abgassteuerverfahren gemäß Anspruch 10, **dadurch gekennzeichnet, dass** einer von dem stromaufwärtigen NOx-Sensor (29a) und dem stromabwärtigen NOx-Sensor (29b) auf Grundlage der durch den stromaufwärtigen NOx-Sensor (29a) und den stromabwärtigen NOx-Sensor (29b) erfassten NOx-Konzentrationen ausgewählt wird.

## Revendications

1. Appareil de commande des gaz d'échappement pour un moteur à combustion interne, comprenant un catalyseur de stockage et de réduction de NOx qui stocke les NOx dans les gaz d'échappement en adsorbant et/ou en absorbant les NOx lorsque le rapport air-carburant des gaz d'échappement entrant dans le catalyseur de stockage et de réduction de NOx (7) est pauvre, et qui réduit les NOx stockés en utilisant les composants de réduction dans les gaz d'échappement lorsque le rapport air-carburant des gaz d'échappement entrant dans le catalyseur de stockage et de réduction de NOx est riche, **caractérisé en ce qu'**il comprend :
un catalyseur de stockage et de réduction de NOx du côté amont (7a) qui est prévu dans un passage d'échappement d'un moteur à combustion interne ;
un catalyseur de stockage et de réduction de NOx du côté aval (7b) qui est prévu dans le passage d'échappement au niveau d'une position en aval du catalyseur de stockage et de réduction de NOx côté amont (7a) ;
un capteur de NOx côté amont (29a) qui est prévu dans le passage d'échappement au niveau d'une position entre le catalyseur de stockage et de réduction de NOx côté amont (7a) et le catalyseur de stockage et de réduction de NOx côté aval (7b) et qui détecte une concentration en NOx dans les gaz d'échappement, et
un capteur de NOx côté aval (29b) qui est prévu dans le passage d'échappement au niveau d'une position en aval du catalyseur de stockage et de réduction de NOx côté aval (7b) et qui détecte la concentration en NOx dans les gaz d'échappement.

2. Appareil de commande des gaz d'échappement selon la revendication 1, **caractérisé en ce que** lorsqu'une opération de crête riche destinée à réduire les NOx stockés dans le catalyseur de stockage et de réduction de NOx est réalisée en changeant temporairement le rapport air-carburant des gaz d'échappement entrant dans le catalyseur de stockage et de réduction de NOx côté amont (7a) d'un rapport air-carburant pauvre à un rapport air-carburant riche, l'un parmi le capteur de NOx côté amont (29a) et le capteur de NOx côté aval (29b) est sélectionné, et le moment du début de l'opération de crête riche est décidé sur la base d'une concentration en NOx dans les gaz d'échappement détectée par le capteur de NOx sélectionné (29a, 29b).

3. Appareil de commande des gaz d'échappement selon la revendication 2, **caractérisé en ce que** l'un parmi le capteur de NOx côté amont (29a) et le capteur de NOx côté aval (29b) est sélectionné conformément à une charge de moteur.

4. Appareil de commande des gaz d'échappement selon la revendication 3, **caractérisé en ce que**, dans un cas dans lequel l'opération de crête riche est réalisée, lorsque la charge du moteur se trouve dans l'une parmi une région de faible charge et une région de charge intermédiaire, le capteur de NOx côté amont (29a) est sélectionné, et lorsque la charge du moteur se trouve dans une région de charge élevée, le capteur de NOx côté aval (29b) est sélectionné.

5. Appareil de commande des gaz d'échappement selon la revendication 2, **caractérisé en ce que** l'un parmi le capteur de NOx côté amont (29a) et le capteur de NOx côté aval (29b) est sélectionné sur la base des concentrations en NOx détectées par le capteur de NOx côté amont (29a) et le capteur de NOx côté aval (29b).

6. Appareil de commande des gaz d'échappement selon la revendication 5, **caractérisé en ce que**, lorsque le moteur est en fonctionnement dans une région de faible charge ou dans une région de charge intermédiaire, la concentration en NOx dans les gaz d'échappement, qui est détectée par le capteur de NOx côté amont (29a), est comparée à la concentration en NOx dans les gaz d'échappement, qui est détectée par le capteur de NOx côté aval (29b), le capteur de NOx qui a détecté la concentration en NOx la plus élevée est sélectionné, et le moment du début de l'opération de crête riche est décidé sur la base de la concentration en NOx dans les gaz d'échappement détectée par le capteur de NOx sélectionné (29a, 29b) ; et lorsque le moteur est en fonctionnement dans une région de charge élevée, le moment du début de l'opération de crête riche est décidé sur la base de la concentration en NOx dans les gaz d'échappement détectée par le capteur de NOx côté aval (29b).

7. Appareil de commande des gaz d'échappement selon l'une quelconque des revendications 1 à 6, **caractérisé en ce qu'**il comprend de plus :
un capteur de rapport air-carburant côté amont (31a) qui est prévu dans le passage d'échappement au niveau d'une position entre le catalyseur de stockage et de réduction de NOx côté amont (7a) et le catalyseur de stockage et de réduction de NOx côté aval (7b) et qui détecte un rapport air-carburant des gaz d'échappement ; et
un capteur de rapport air-carburant côté aval (31b) qui est prévu dans le passage d'échappement au niveau d'une position en aval du catalyseur de stockage et de réduction de NOx côté aval (7b) et qui détecte le rapport air-carburant des gaz d'échappement, dans lequel
lorsque l'opération de crête riche est lancée sur la base de la concentration en NOx détectée par le capteur de NOx côté amont (29a), le moment de fin de l'opération de crête riche est décidé sur la base du rapport air-carburant des gaz d'échappement détecté par le capteur de rapport air-carburant côté aval (31a), et dans lequel
lorsque l'opération de crête riche est lancée sur la base de la concentration en NOx détectée par le capteur de NOx côté aval (29b), le moment de fin de l'opération de crête riche est décidé sur la base du rapport air-carburant des gaz d'échappement détecté par le capteur de rapport air-carburant côté aval (31b).

8. Appareil de commande des gaz d'échappement selon l'une quelconque des revendications 1 à 7, **caractérisé en ce que** :
chacun parmi le catalyseur de stockage et de réduction de NOx côté amont (7a) et le catalyseur de stockage et de réduction de NOx côté aval (7b) possède une capacité de stockage d'oxygène consistant à absorber l'oxygène dans les gaz d'échappement lorsque le rapport air-carburant des gaz d'échappement est pauvre et à libérer l'oxygène absorbé lorsque le rapport air-carburant des gaz d'échappement est riche ;
la capacité de stockage d'oxygène du catalyseur de stockage et de réduction de NOx côté aval (7b) est rendue supérieure à la capacité de stockage d'oxygène du catalyseur de stockage et de réduction de NOx côté aval (7a) ;
lorsque l'opération de crête riche est lancée sur la base de la concentration en NOx détectée par le capteur de NOx côté aval (29b), les NOx stockés dans le catalyseur de stockage et de réduction de NOx côté amont (7a) sont d'abord réduits, puis les NOx stockés dans le catalyseur de stockage et de réduction de NOx côté aval (7b) sont réduits ; et
lorsque les NOx stockés dans le catalyseur de stockage et de réduction de NOx côté aval (7b) sont réduits, le rapport air-carburant des gaz d'échappement entrant dans le catalyseur de stockage et de réduction de NOx côté amont (7a) pendant l'opération de crête riche est établi pour être faible comparé à lorsque les NOx stockés dans le catalyseur de stockage et de réduction de NOx côté amont (7a) sont réduits.

9. Appareil de commande des gaz d'échappement selon l'une quelconque des revendications 1 à 7, **caractérisé en ce que** :
chacun parmi le catalyseur de stockage et de réduction de NOx côté amont (7a) et le catalyseur de stockage et de réduction de NOx côté aval (7b) possède une capacité de stockage d'oxygène consistant à absorber l'oxygène dans les gaz d'échappement lorsque le rapport air-carburant des gaz d'échappement est pauvre et à libérer l'oxygène absorbé lorsque le rapport air-carburant des gaz d'échappement est riche ; et
la capacité de stockage d'oxygène du catalyseur de stockage et de réduction de NOx côté aval (7b) est rendue supérieure à la capacité de stockage d'oxygène du catalyseur de stockage et de réduction de NOx côté amont (7a), et une capacité de stockage de NOx du catalyseur de stockage et de réduction de NOx côté amont (7a) est rendue supérieure à une capacité de stockage de NOx du catalyseur de stockage et de réduction de NOx côté aval (7b).

10. Procédé de commande des gaz d'échappement pour un moteur à combustion interne, comprenant i) un catalyseur de stockage et de réduction de NOx (7) qui comprend un catalyseur de stockage et de réduction de NOx côté amont (7a) qui est prévu dans un passage d'échappement du moteur à combustion interne et un catalyseur de stockage et de réduction de NOx côté aval (7b) qui est prévu dans le passage d'échappement au niveau d'une position en aval du catalyseur de stockage et de réduction de NOx côté amont (7a), et qui stocke les NOx dans les gaz d'échappement en adsorbant et/ou en adsorbant les NOx et lorsque le rapport air-carburant des gaz d'échappement entrant dans le catalyseur de stockage et de réduction de NOx (7) est pauvre, et qui réduit les NOx stockés en utilisant des composants de réduction dans les gaz d'échappement lorsque le rapport air-carburant des gaz d'échappement entrant dans le catalyseur de stockage et de réduction de NOx est riche, ii) un capteur de NOx le côté amont (29a) qui est prévu dans le passage d'échappement au niveau d'une position entre le catalyseur de stockage et de réduction de NOx côté amont (7a) et le catalyseur de stockage et de réduction de NOx côté aval (7b) et qui détecte une concentration en a NOx dans les gaz d'échappement, et iii) un capteur de NOx côté aval (29b) qui est prévu dans le passage d'échappement au niveau d'une opposition en aval du catalyseur de stockage et de réduction de NOx côté aval (7b) et qui détecte la concentration en NOx dans les gaz d'échappement, **caractérisé en ce qu'**il comprend les étapes consistant à :
sélectionner l'un parmi le capteur de NOx côté amont (29a) et le capteur de NOx côté aval (29b) lorsqu'une opération de crête riche destinée à réduire les NOx stockés dans le catalyseur de stockage et de réduction de NOx (7) est réalisée en changeant temporairement le rapport air-carburant des gaz d'échappement entrant dans le catalyseur de stockage et de réduction de NOx côté amont (7a) d'un rapport air-carburant pauvre à un rapport air-carburant riche ; et
décider le moment du début de l'opération de crête riche sur la base d'une concentration en NOx dans les gaz d'échappement détectée par le capteur de NOx sélectionné (29a, 29b).

11. Procédé de commande des gaz d'échappement selon la revendication 10, **caractérisé en ce que** l'un parmi le capteur de NOx côté amont (29a) et le capteur de NOx côté aval (29b) est sélectionné conformément à la charge du moteur.

12. Procédé de commande des gaz d'échappement selon la revendication 10, **caractérisé en ce que** l'un parmi le capteur de NOx côté amont (29a) et le capteur de NOx côté aval (29b) est sélectionné sur la base des concentrations en NOx détectées par le capteur de NOx côté amont (29a) et le capteur de NOx côté aval (29b).
